# EUROPEAN PATENT SPECIFICATION

(11) **EP 2 886 397 B1**
(45) Date of publication and mention of the grant of the patent: **06.09.2017**
(21) Application number: 13879427.6
(22) Date of filing: 26.07.2013
(51) Int. Cl.: B60R 16/02, B60R 16/023, H04L 12/24, B60W 50/02, G07C 5/08, G07C 5/00, H04L 12/40, B60W 50/04

(54) **VEHICLE CONTROL DEVICE, AND VEHICLE CONTROL SYSTEM**
FAHRZEUGSTEUERUNGSVORRICHTUNG UND FAHRZEUGSTEUERUNGSSYSTEM
DISPOSITIF DE COMMANDE DE VÉHICULE, ET SYSTÈME DE COMMANDE DE VÉHICULE

(30) Priority: 14.08.2012 JP 2012179891
(43) Date of publication of application: 24.06.2015
(73) Proprietor: Hitachi Automotive Systems, Ltd., Hitachinaka-shi, Ibaraki 312-8503 (JP)
(72) Inventor: TSUKIDATE, Tsunamichi, Tokyo 100-8280 (JP); ISHIGOOKA, Tasuku, Tokyo 100-8280 (JP); NARISAWA, Fumio, Tokyo 100-8280 (JP); NAGAURA, Wataru, Hitachinaka-shi, Ibaraki 312-8503 (JP); OGURA, Hidetoshi, Hitachinaka-shi, Ibaraki 312-8503 (JP)
(74) Representative: MERH-IP Matias Erny Reichl Hoffmann Patentanwälte PartG mbB
(86) International application number: PCT/JP2013/070269
(87) International publication number: WO 2014/027558

(56) References cited:
- JP-A- 2008 024 015
- JP-A- 2010 206 697
- JP-A- 2012 094 044
- US-A1- 2005 021 200
- US-A1- 2007 076 593
- US-A1- 2008 021 607

## Description

### Technical Field

The present invention relates to a vehicle control device and a vehicle control system including a plurality of the vehicle control devices.

### Background Art

In recent years, many vehicle control systems each include ECUs (Electronic Control Units) which are electronic vehicle control devices and an in-vehicle LAN (Local Area Network) which enables communication between plural ECUs. A widely used example of such a network is a CAN (Controller Area Network).

Facing requests for environmental burden reduction and safety improvement, vehicle control systems have been increasingly higher in function, more function-decentralized, and more complicated. As a result, for vehicle control systems, the standardization of ECU software architecture, the promotion of electronic control of safety devices, and providing mechanisms for keeping the security of such safety devices have been assuming growing importance. For example, car makers provide ECUs individually specialized for decentralized functions of each vehicle control system, so that each vehicle control system includes plural ECUs. By introducing standardized software architectures for vehicle control devices, it has been made easier to configure vehicle control systems each including a combination of ECUs of different specifications.

Also, with electronic safety devices having come into use, functional safety mechanisms have been introduced into vehicle control systems. The functional safety represents an idea of securing safety, when an electrical or electronic system develops a fault, by making the system transit to the safe side.

The safety of communication between vehicle control devices can be secured by performing diagnosis by software. Generally, however, vehicle control systems are differently configured depending on vehicle types, vehicle destinations, and functions optionally selected by users when purchasing vehicles, so that software used for diagnostic function settings correspondingly differs between vehicles. Hence, to secure communication safety, a mechanism for checking that the diagnostic settings made for communication are correct both on the transmitting side and the receiving side is required. Patent Literature 1 discloses an in-vehicle control device having a communication function for checking whether or not the relationship between programs written in itself and other microcomputers is compatible with the type of the vehicle mounted with the control device. According to the control device, even if an incompatible program is written in a microcomputer, the incompatible program can be detected.

### Citation List

### Patent Literature

Patent Literature 1: Japanese Unexamined Patent Application Publication No. Hei 5-118248

### Summary of Invention

### Technical Problem

The control device disclosed in the Patent Literature 1 checks whether or not the relationship between programs written in different microcomputers is compatible with the relevant vehicle type. It does not check the diagnostic settings made for inter-microcomputer communication. Therefore, whether or not the diagnostic settings made for communication between vehicle control devices included in a vehicle control system are correct both on the transmitting side and the receiving side cannot be checked.

In US 2008 021607 A1, a navigation system integrated with a diagnostic device is described. A control unit for diagnostic communication makes an enquiry to electronic control units such as an engine control unit, a transmission control unit, and a brake control unit connected to a CAN about data, which is used for the diagnosis of trouble caused based on setting information stored in a memory.

In US 2005 021200 A1, a control center transmits failure information transmission requests to a vehicle. The vehicle receives the failure information transmission request information transmitted from the control center. A navigation ECU and a gateway ECU obtain failure information from each ECU in cooperation with each other.

### Solution to Problem

There is provided a vehicle control device exchanging communication data with another vehicle control device connected thereto via a network. The vehicle control device includes: a storage unit for storing first diagnostic setting information concerning the communication data; a diagnostic setting.information transmit data generation unit for generating first diagnostic setting information transmit data based on the first diagnostic setting information; a transmission processing unit for transmitting the first diagnostic setting information transmit data to the other vehicle control device via the network; a reception processing unit for obtaining second diagnostic setting information transmit data transmitted from the other vehicle control device via the network; and a diagnostic setting checking unit for executing a diagnostic setting checking process, the diagnostic setting checking process including extracting second diagnostic setting information concerning the communication data from the second diagnostic setting information transmit data, comparing the first diagnostic setting information with the second diagnostic setting information, and storing a diagnostic setting check result obtained by the comparison in the storage unit.

### Advantageous Effects of Invention

According to the present invention, it can be checked whether or not diagnostic settings for communication between vehicle control devices configuring a vehicle control system are correct on both the transmission side and the reception side.

### Brief Description of Drawings

FIG. 1 is a schematic overall configuration diagram of a vehicle control system according to an embodiment of the present invention.
FIG. 2 is a configuration diagram of a brake assist device ECU 11.
FIG. 3 is a configuration diagram of a meter ECU 13.
FIG. 4 is a diagram showing an example of a table size management table 11120010.
FIG. 5 is a diagram showing an example of a transmit data management table 11120020.
FIG. 6 is a diagram showing an example of a receive data management table 11120030.
FIG. 7 is a diagram showing an example of a diagnostic setting check data management table 11120040.
FIG. 8 is a diagram showing an example of a diagnostic setting information-related flag management table 11120060.
FIG. 9 is a diagram showing an example of a diagnostic setting information storage order management table 11120070.
FIG. 10 is a diagram showing an example of a previous counter value management table 11120080.
FIG. 11 is a diagram showing an example of a diagnostic setting information (transmission processing) management table 11120090.
FIG. 12 is a diagram showing an example of a diagnostic setting information (reception processing) management table 11120100.
FIG. 13 is a diagram showing an example of a diagnostic setting information transmission determination criterion management table 11120110.
FIG. 14 is a diagram showing an example of a diagnostic setting check result storage table 11140010.
FIG. 15 is a diagram showing an example of a key-on count management table 11140020.
FIG. 16 is a diagram showing an example configuration of diagnostic setting information transmit data 140010.
FIG. 17 is a diagram showing an example configuration of a diagnostic setting check result request data 140020.
FIG. 18 is a diagram showing an example configuration of a diagnostic setting check result transmit data 140030.
FIG. 19 is a diagram showing an example configuration of a diagnostic setting abnormality notification data 140040.
FIG. 20 is a diagram showing an example of a receive data management table 13070010 for the meter ECU 13.
FIG. 21 is a diagram showing an example of a warning lamp on flag management table 13070020.
FIG. 22 is a diagram showing the operation flow of a diagnostic setting information transmission unit 1104.
FIG. 23 is a diagram showing the operation flow of a diagnostic setting information transmission timing adjustment unit 1106.
FIG. 24 is a diagram showing the operation flow of a diagnostic setting information transmit data generation unit 1107.
FIG. 25 is a diagram showing the operation flow of a transmission processing unit 1110 transmitting diagnostic setting information transmit data 140010.
FIG. 26 is a diagram showing the operation flow of a diagnostic setting information reception unit 1105.
FIG. 27 is a diagram showing the operation flow of a diagnostic setting information transmission unit 1111.
FIG. 28 is a diagram showing the operation flow of the CAN reception processing executed at step S1111000 in the operation flow of the reception processing unit 1111 shown in FIG. 27.
FIG. 29 is a diagram showing the operation flow of a diagnostic setting checking unit 1108.
FIG. 30 is a diagram showing the operation flow of a diagnostic setting check result transmit data generation unit 1109.
FIG. 31 is a diagram showing the operation flow of a transmission processing unit 1110 transmitting diagnostic setting check result transmit data 140030 or making diagnostic setting abnormality notification.
FIG. 32 is a diagram showing the operation flow of an abnormality notification information reception unit 1304.
FIG. 33 is a diagram showing the operation flow of a reception processing unit 1306.
FIG. 34 is a diagram showing the operation flow of the CAN reception processing executed at step S1306000 in the operation flow of the reception processing unit 1306 shown in FIG. 33.
FIG. 35 is a diagram showing the operation flow of a warning lamp lighting determination unit 1305.
FIG. 36 is a diagram showing an example on-screen display outputted by a diagnostic setting information check result analysis tool 2. Description of Embodiments

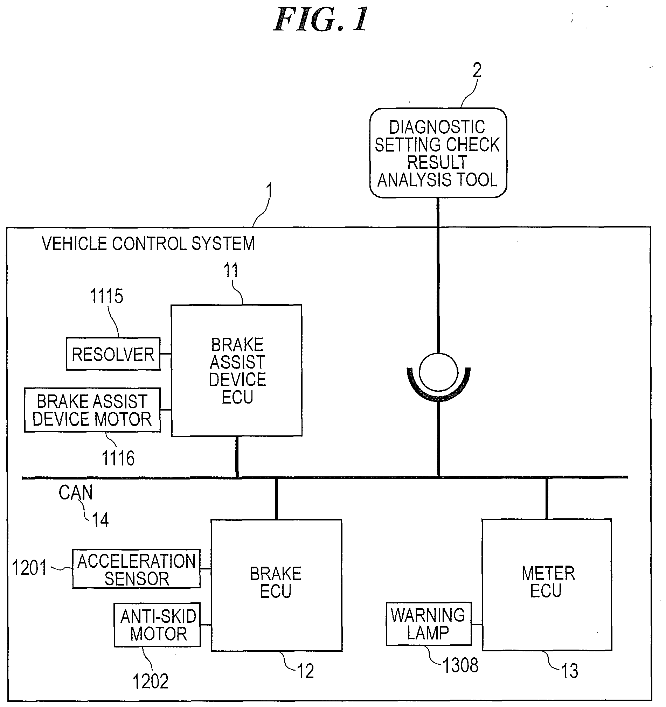

FIG. 1 is a schematic diagram showing an overall configuration of a vehicle control system including plural vehicle control devices according to an embodiment of the present invention. A vehicle control system 1 includes a brake assist device ECU 11 which is a vehicle control device according to the present invention and which controls a brake assist device. The brake assist device ECU11 is connected to a CAN 14 and exchanges, via the CAN 14, diagnostic setting information concerning mutual communication data with another in-vehicle control device, i.e. a communication partner. The brake assist device EU11 compares the diagnostic setting information set on the brake assist device EU11 with the diagnostic setting information obtained from another in-vehicle control device. Based on the comparison results, the brake assist device EU11 determines whether the diagnostic settings for its communication data are correctly made on both the transmitting side and the receiving side. A meter ECU 13 which is another vehicle control device according to the present invention is connected to the CAN 14. When the meter ECU 13 receives diagnostic setting abnormality notification data from another ECU, the meter ECU 13 lights a warning lamp to notify the driver of the abnormal condition of the vehicle control system 1. A diagnostic setting check result analysis tool 2 is connected to the CAN 14 and obtains diagnostic setting check results recorded by different vehicle control devices via the CAN 14. The diagnostic setting check results obtained can be displayed on the output screen of the diagnostic setting check result analysis tool 2 based on a data configuration desired by the user.

Besides the brake assist device ECU 11 and the meter ECU 13, a brake device ECU 12 and various other vehicle control devices are also mounted on a vehicle. For example, an ECU for controlling the engine to drive the vehicle, an ECU for controlling the motor to drive the vehicle, and a vehicle ECU which is a highest-level ECU to control the whole vehicle may also be included in the vehicle control devices mounted on the vehicle. In the following, the foregoing two ECUs will be described as examples, and descriptions of the other ECUs will be omitted. The two ECUs start operating when the driver turns on the ignition key of the vehicle, thereby, starting up the engine or the drive device for the drive motor to drive the vehicle and causing the vehicle control system 1 to be powered. That is, these ECUs start operating when, as a result of turning on of the ignition key, the engine or the drive device for the vehicle driving motor is started. The diagnostic setting check operation to be described in the following may be executed at the same time as when the ECUs start operating, or may be executed when the ignition key is turned on in accordance with a command from a higher-level ECU received via the CAN 14 to which the ECUs are connected. In either case, it is desirable that the diagnostic setting check operation according to the present invention be executed when the ignition key of the vehicle is turned on.

The diagnostic setting information is recorded for communication data of each ECU. The diagnostic setting information represents diagnosis to be made for the transmit data and receive data of each ECU and can have various configurations. An object of the present invention is to provide a system which can check, using the diagnostic setting information and between plural ECUs via a network, whether the diagnostic settings for communication are correctly made on both the transmitting side and the receiving side.

According to the present invention, the foregoing plural vehicle control devices (ECUs) have a basically common configuration with regard to checking of diagnostic settings for communication. In the following embodiment, the diagnostic setting check result analysis tool 2 requests transmission of diagnostic setting check results; in response, the vehicle control devices transmit diagnostic setting check results via the CAN 14; and the diagnostic setting check result analysis tool 2 receives the diagnostic setting check results. However, the present invention is not limited to the embodiment. For example, an arrangement may be made such that, by having a vehicle control device request a diagnosis result at another vehicle control device and check the received diagnosis result, plural vehicle control devices mutually monitor their operations so as to detect abnormal condition regarding diagnostic settings for their communication.

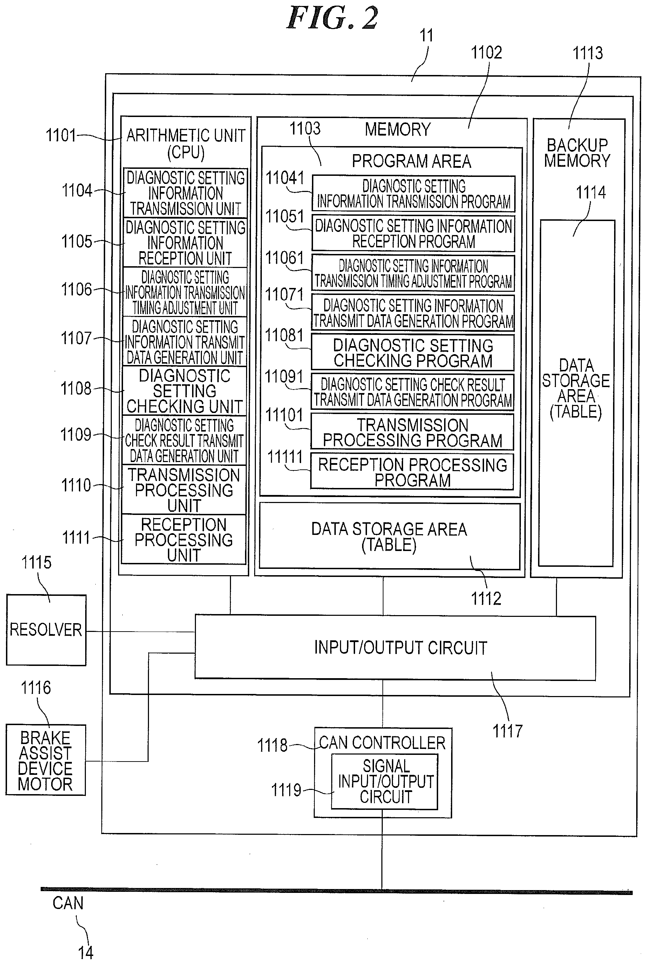

FIG. 2 is a block diagram showing the configuration of the brake assist device ECU 11 according to the present invention. The brake assist device ECU 11 includes an arithmetic unit (CPU) 1101, a memory 1102, a backup memory 1113, an input/output circuit 1117, and a CAN controller 1118 and is connected to the CAN 14, a resolver 1115, and a brake assist device motor 1116.

The arithmetic unit 1101 is a processor (CPU: Central Processing Unit) for executing the following programs stored in the memory 1102. By executing the respective programs, the arithmetic unit 1101 can function as the following constituent elements: a diagnostic setting information transmission unit 1104, a diagnostic setting information reception unit 1105, a diagnostic setting information transmission timing adjustment unit 1106, a diagnostic setting information transmit data generation unit 1107, a diagnostic setting checking unit 1108, a diagnostic setting check result transmit data generation unit 1109, a transmission processing unit 1110, and a reception processing unit 1111. It is also possible to configure equivalent functions using hardware such as circuit devices.

The memory 1102 has a program area 1103 and a data storage area 1112. The program area 1103 stores the following programs corresponding to the above constituent elements realized by the arithmetic unit 1101: a diagnostic setting information transmission program 11041, a diagnostic setting information reception program 11051, a diagnostic setting information transmission timing adjustment program 11061, a diagnostic setting information transmit data generation program 11071, a diagnostic setting checking program 11081, a diagnostic setting check result transmit data generation program 11091, a transmission processing program 11101, and a reception processing program 11111.

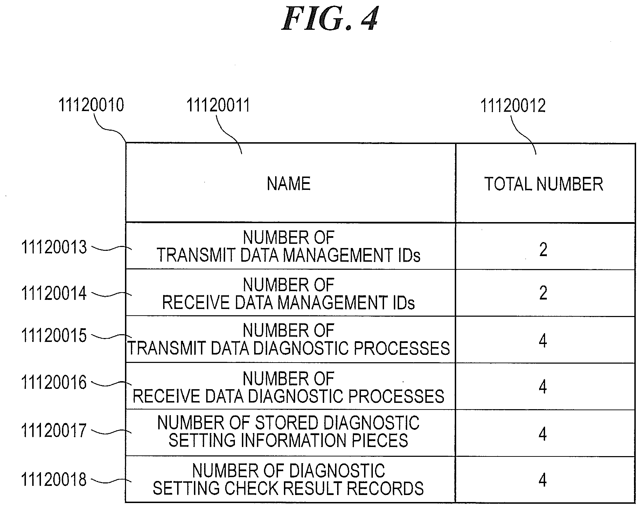

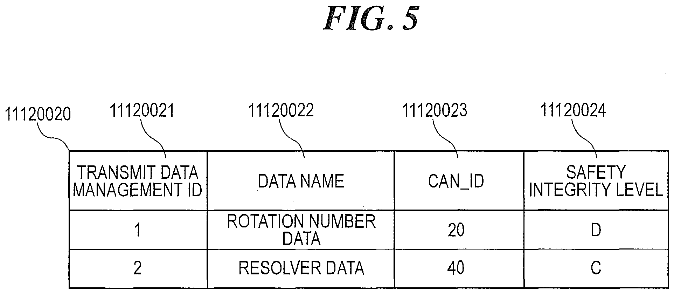

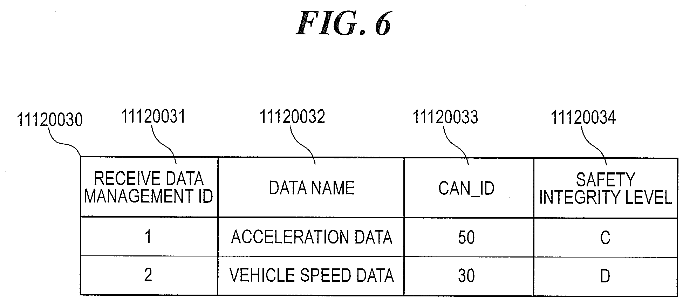

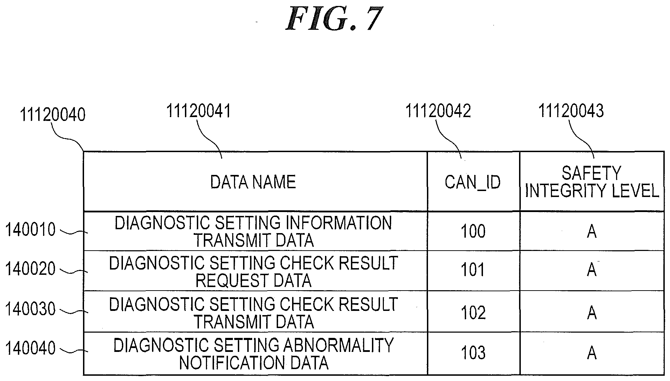

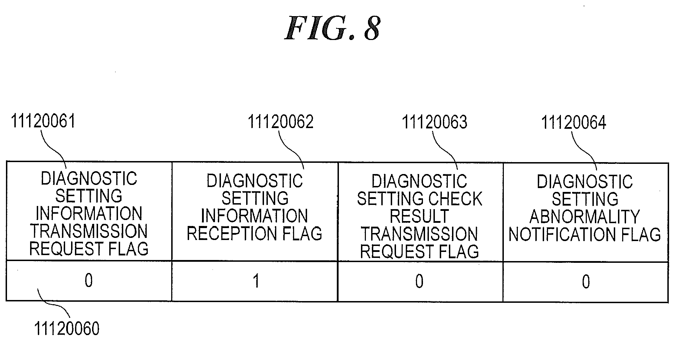

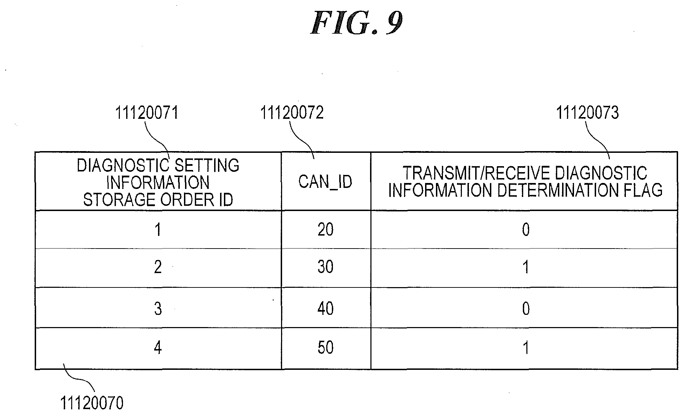

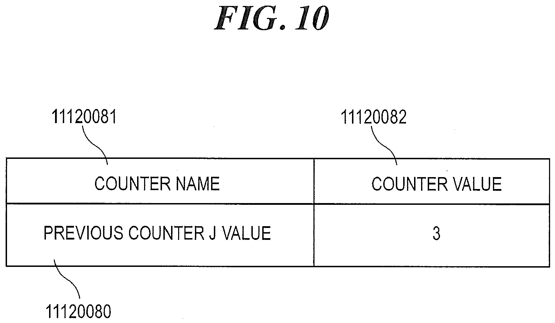

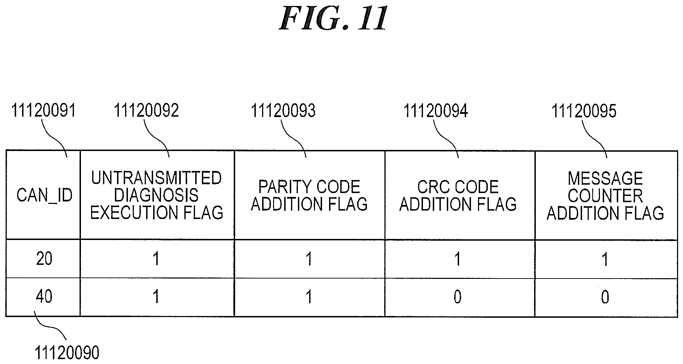

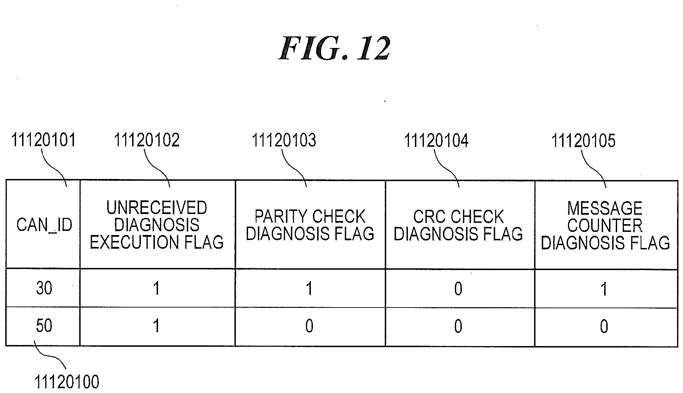

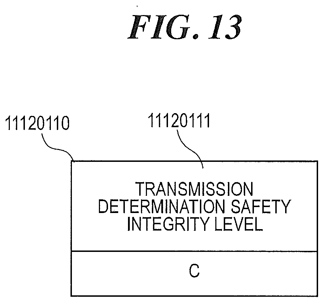

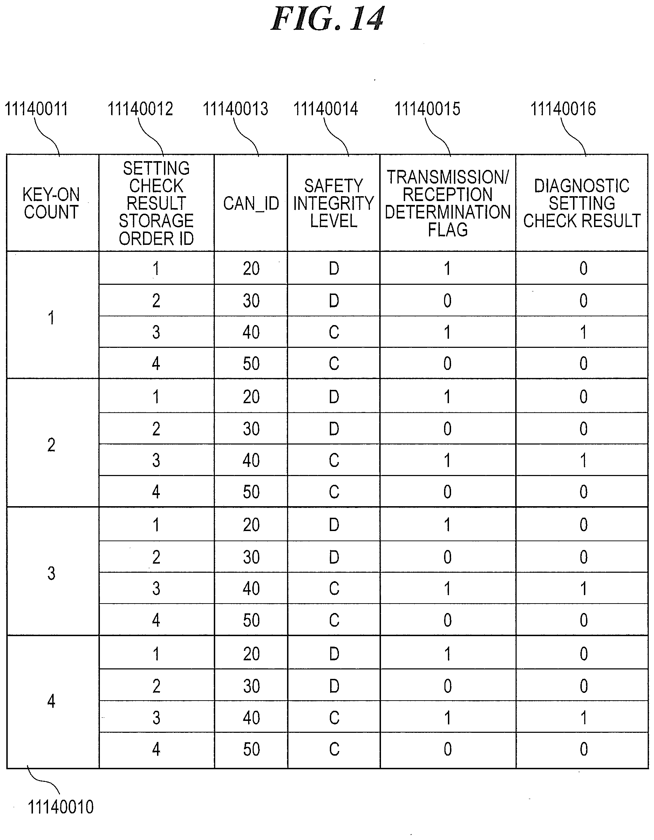

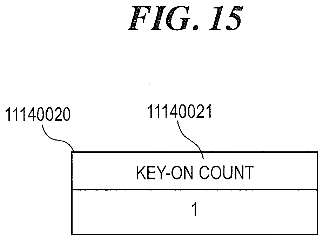

A data storage area 1112 stores a table size management table 11120010 to be described later with reference to FIG. 4, a transmit data management table 11120020 shown in FIG. 5, a receive data management table 11120030 shown in FIG. 6, a diagnostic setting check data management table 11120040 shown in FIG. 7, a diagnostic setting information-related flag management table 11120060 shown in FIG. 8, a diagnostic setting information storage order management table 11120070 shown in FIG. 9, a previous counter value management table 11120080 shown in FIG. 10, a diagnostic setting (transmission processing) management table 11120090 shown in FIG. 11, a diagnostic setting (reception processing) management table 11120100 shown in FIG. 12, and a diagnostic setting information transmission determination criterion management table 11120110 shown in FIG. 13. The backup memory 1113 stores a data storage area 1114. The data storage area 1114 stores a diagnostic setting check result storage table 11140010 to be described later with reference to FIG. 14 and a key-on count management table 11140020 shown in FIG. 15.

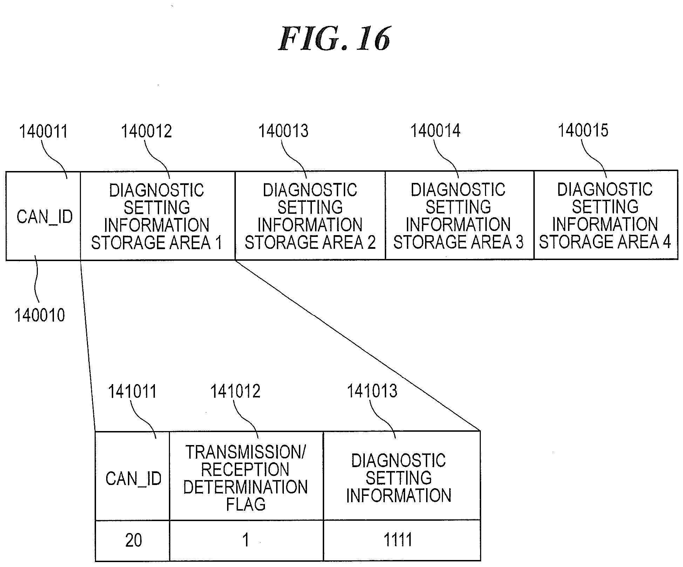

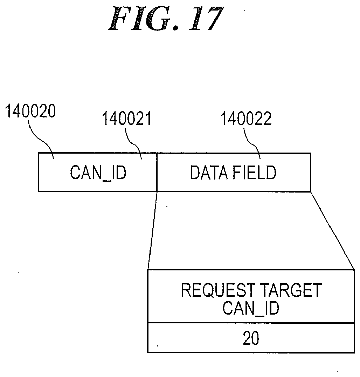

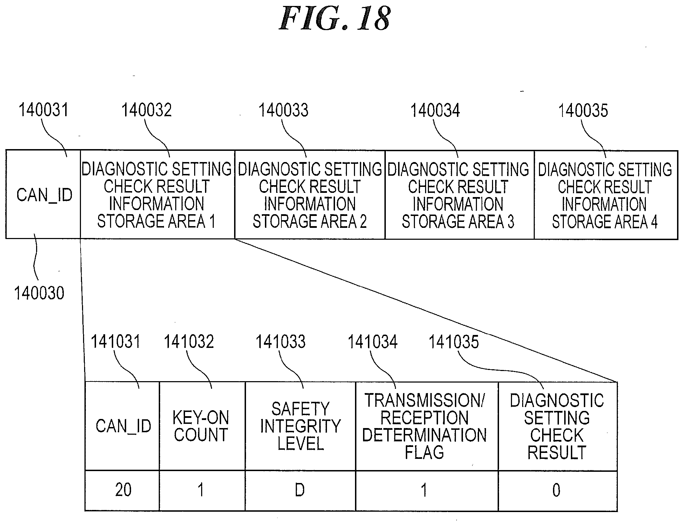

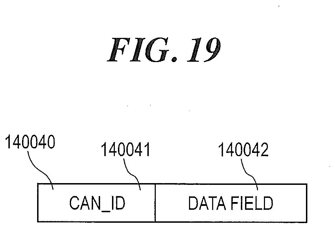

The input/output circuit 1117 performs interfacing for signal inputting and outputting between the arithmetic unit 1101, memory 1102 and backup memory 1113 and the resolver 1115, brake assist device motor 1116 and CAN controller 1118. The CAN controller 1118 has an internal signal input/output circuit 1119 and performs data communication processing between the brake assist device ECU 11 and the CAN 14. The data communicated between them includes the transmit data listed in the transmit data management table 11120020 to be described later with reference to FIG. 5 and the receive data listed in the receive data management table 11120030 shown in FIG. 6. Diagnostic setting information transmit data 140010 to be described with reference to FIG. 16, diagnostic setting check result request data 140020 shown in FIG. 17, diagnostic setting check result transmit data 120030 to be described later with reference to FIG. 18, and diagnostic setting abnormality notification data 140040 shown in FIG. 19.

The configuration of the brake assist device ECU 11 included in the vehicle control device according to the present invention will be described in the following as a typical ECU architecture supporting functional safety compliant with, for example, ASIL_D, i.e. the highest-level ASIL (Automotive Safety Integrity Level). The ASIL is a safety integrity level standard prescribed in functional safety standard for automobiles ISO26262. The brake device ECU 12 and other ECUs also have architecture similar to that of the brake assist device ECU 11. These ECUs may, however, mutually differ in terms of their internal configurations (program configurations) and the configurations of sensors and control-target devices connected to them. For example, the brake assist device ECU 11 is connected with the resolver 1115 as a sensor and with the brake assist device motor 1116 as an actuator to be controlled, whereas the brake device ECU 12 is connected with an acceleration sensor 1201 as a sensor and with an anti-skid motor 1202 as an actuator to be controlled.

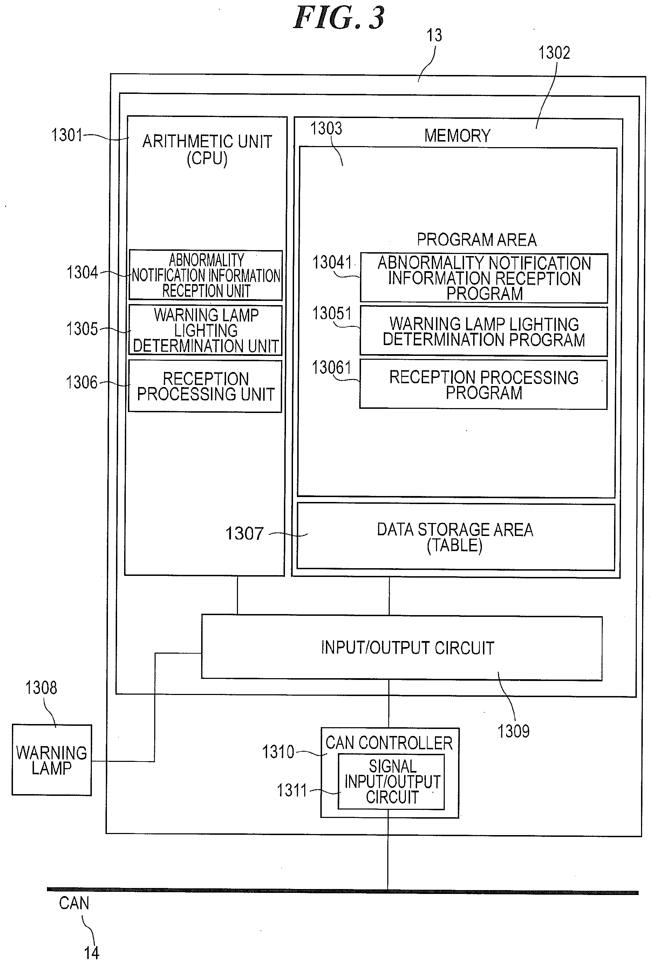

FIG. 3 is a configuration diagram of the meter ECU 13 according to the present invention. The meter ECU 13 includes an arithmetic unit (CPU) 1301, a memory 1302, an input/output circuit 1309, and a CAN controller 1310. It is connected to the CAN 14 and a warning lamp 1308.

The arithmetic unit 1301 is a processor (CPU: Central Processing Unit) for executing the following programs stored in the memory 1302. By executing the respective programs, the arithmetic unit 1301 can function as the following constituent elements: an abnormality notification information reception unit 1304, a warning lamp lighting control unit 1305, and a reception processing unit 1306. It is also possible to configure equivalent functions using hardware such as circuit devices.

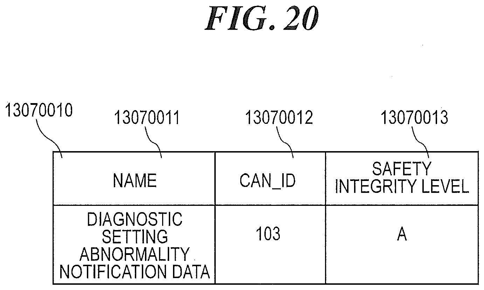

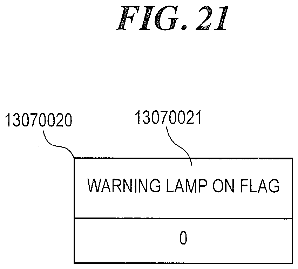

The memory 1302 has a program area 1303 and a data storage area 1307. The program area 1303 stores an abnormality notification information reception program 13041, a warning lamp lighting control program 13051, and a reception processing program 13061. The data storage area 1307 stores a receive data management table 13070010 for meter ECU 13 to be described later with reference to FIG. 20 and a warning lamp on flag management table 13070020 shown in FIG. 21.

The input/output circuit 1309 performs interfacing for signal inputting and outputting between the arithmetic unit 1301 and memory 1302 and the warning lamp 1308 and CAN controller 1310. The CAN controller has an internal signal input/output circuit 1311 and performs data communication processing between the meter ECU 13 and the CAN 14.

For an exemplary embodiment of the vehicle control device according to the present invention, the configuration of the meter ECU 13 and devices connected thereto will be described based on FIG. 3, but the configuration is not limited to the one shown in FIG. 3. For example, the diagnostic setting information of the meter ECU 13 may be exchanged between other vehicle control devices so as to detect diagnostic setting information abnormality.

The tables stored in the data storage area 1112 of the brake assist device ECU 11 are configured as described in the following.

FIG. 4 shows an example of the table size management table 11120010. The table size management table 11120010 is a table for storing the numbers of records included in various tables to be described later (table sizes) for facilitating program processing and has a name field 11120011 and a total number field 11120012. The number of transmit data management IDs 11120013 representing the number of records (number of IDs) recorded in the transmit data management table 11120020 shown in FIG. 5, the number of receive data management IDs 11120014 representing the number of records (number of IDs) recorded in the receive data management table 11120030 shown in FIG. 6, the number of transmit data diagnostic processes 11120015 representing the number of diagnostic processing records recorded in the diagnostic setting information (transmission processing) management table 11120090 shown in FIG. 11, the number of receive data diagnostic processes 11120016 representing the number of diagnostic processing records recorded in the diagnostic setting information (reception processing) management table 11120100 shown in FIG. 12, the number of stored diagnostic setting information pieces 11120017 representing the number of diagnostic setting information pieces included in the diagnostic setting information transmit data 140010 shown in FIG. 16, and the number of diagnostic setting check result records 11120018 representing the number of records stored in the diagnostic setting check result storage table 11140010 shown in FIG. 14 are recorded in this table. In describing the present embodiment, when referring to the table sizes of individual tables, the table size management table 11120010 shown in FIG. 4 is used for descriptive convenience, but the configuration of the table is not limited to that shown in FIG. 4.

FIG. 5 shows an example of the transmit data management table 11120020. The transmit data management table 11120020 is a table for managing the CAN_IDs and safety integrity levels of transmit data transmitted by the brake assist device ECU 11. The transmit data management table 11120020 has a transmit data management ID field 11120021, a data name field 11120022, a CAN_ID field 11120023, and a safety integrity level field 11120024. Only the rotation speed data representing the number of rotations of the brake assist device motor 1116 and the resolver data obtained from the resolver 1115 that are important transmit data from the brake assist device ECU 11 are recorded in the table shown in FIG. 5, but the data recorded in the table are not limited to them.

The data name field 11120022 holds the data names of individual transmit data. The CAN_ID field 11120023 holds the CAN_IDs of individual transmit data. The safety integrity level field 11120024 represents the safety integrity levels allocated to individual transmit data out of four levels A, B, C, and D. In this field, the lowest safety integrity level is represented by "A" and the highest safety integrity level is represented by "D." A high safety integrity level indicates that the probability of the data allocated with the safety integrity level showing an abnormal value is high or that, when the data is abnormal, it greatly affects the system.

The safety integrity levels are set for individual transmit data, for example, based on the ASIL. The safety integrity levels may, however, be set based on other than the ASIL. The safety integrity levels may be set to be updatable if the safety integrity level standard, for example, the ASIL is changed or if the communication data is changed. The safety integrity levels may be updated, for example, by having diagnostic setting information including updated safety integrity level information transmitted by the diagnostic setting check result analysis tool 2 via the CAN 14. When such diagnostic setting information is received by a vehicle control device, the safety integrity levels set in the vehicle control device are updated and, subsequently, diagnostic settings for communication data are checked based on the updated safety integrity levels.

FIG. 6 shows an example of the receive data management table 11120030. The receive data management table 11120030 is a table for managing the CAN_IDs and safety integrity levels of receive data received by the brake assist device ECU 11. The receive data management table 11120030 has a receive data management ID field 11120031, a data name field 11120032, a CAN_ID field 11120033, and a safety integrity level field 11120034. Only the acceleration data and vehicle speed data that are important receive data received by the brake assist device ECU 11 are recorded in the table shown in FIG. 6, but the data recorded in the table are not limited to them.

The data name field 11120032 holds the data names of individual receive data. The CAN_ID field 11120033 holds the CAN_IDs of individual receive data.

The safety integrity level field 11120034 represents the safety integrity levels allocated to individual receive data out of four levels A, B, C, and D. In this field, the lowest safety integrity level is represented by "A" and the highest safety integrity level is represented by "D." In this table like in the foregoing transmit data management table 11120020 shown in FIG. 5, a high safety integrity level indicates that the probability of the data allocated with the safety integrity level showing an abnormal value is high or that, when the data is abnormal, it greatly affects the system.

FIG. 7 shows an example of the diagnostic setting check data management table 11120040. The diagnostic setting check data management table 11120040 is used by the brake assist device ECU 11 to manage the CAN_IDs and safety integrity levels allocated to diagnostic setting check data inputted/outputted between the brake assist device ECU 11 and the CAN 14 for purposes of exchanging diagnostic setting information with other vehicle control devices or communicating diagnostic setting check results to the diagnostic setting check result analysis tool 2 or meter ECU 13. The diagnostic setting check data management table 11120040 has a data name field 11120041, a CAN_ID field 11120042, and a safety integrity level field 11120043.

The data name field 11120041 holds the data names of diagnostic setting check data inputted/outputted between the brake assist device ECU 11 and the CAN 14. The diagnostic setting check data includes diagnostic setting information transmit data 140010 for transmitting the diagnostic setting information of the brake assist device ECU 11 to another vehicle control device connected to the CAN 14, diagnostic setting check result request data 140020 used when the diagnostic setting check result analysis tool 2 requests the brake assist device ECU 11 to transmit a diagnostic setting check result, diagnostic setting check result transmit data 140030 used when the brake assist device ECU 11 transmits a diagnostic setting check result to the diagnostic setting check result analysis tool 2, and diagnostic setting abnormality notification data 140040 used when the brake assist device ECU 11 notifies the meter ECU 13 of occurrence of diagnostic setting abnormality in itself. Details of these data will be described later with reference to FIGS. 16, 17, 18, and 19.

The CAN_ID field 11120042 holds the CAN_IDs of the above diagnostic setting check data.

The safety integrity level field 11120043 represents the safety integrity levels allocated to individual diagnostic setting check data out of four levels A, B, C, and D. In this field, the lowest safety integrity level is represented by "A" and the highest safety integrity level is represented by "D." In this table, as also described in the foregoing, a high safety integrity level indicates that the probability of the data allocated with the safety integrity level showing an abnormal value is high or that, when the data is abnormal, it greatly affects the system.

FIG. 8 shows an example of the diagnostic setting information-related flag management table 11120060. The diagnostic setting information-related flag management table 11120060 is a table for managing requests for data transmission/reception between the brake assist device ECU 11 and other vehicle control devices and the diagnostic setting check result analysis tool 2 that are connected to the brake assist device ECU 11 via the CAN 14. The diagnostic setting information-related flag management table 11120060 has a diagnostic setting information transmission request flag field 11120061, a diagnostic setting information reception flag field 11120062, a diagnostic setting check result transmission request flag field 11120063 , and a diagnostic setting abnormality notification flag field 11120064.

The diagnostic setting information transmission request flag field 11120061 stores a flag for determining whether or not a transmission request issued by another vehicle control device to the brake assist device ECU 11 for transmission of diagnostic setting information exists. In this field, when no request from any other vehicle control device for transmission of diagnostic setting information exists, "0" is held and, when such a request exists, "1" is held. The diagnostic setting information reception flag field 11120062 stores a flag for determining whether or not diagnostic setting information has been received from any other vehicle control device. In this field, when diagnostic setting information has not been received from any other vehicle control device connected to the CAN 14, "0" is held and, when diagnostic setting information has been received from another vehicle control device connected to the CAN 14, "1" is held.

The diagnostic setting check result transmission request flag field 11120063 stores a flag for determining whether or not a request from the diagnostic setting check result analysis tool 2 for transmission of a diagnostic setting check result has been received. In this field, when no request from the diagnostic setting check result analysis tool 2 for transmission of a diagnostic setting check result exists, "0" is held and, when such a request exists, "1" is held. The diagnostic setting abnormality notification flag field 11120064 stores a flag for determining whether or not to notify of diagnostic setting abnormality at the brake assist device ECU 11 itself to the meter ECU 13 connected to the brake assist device ECU 11 via the CAN 14. In this field, when such notification is not to be made, "0" is held and, when such notification is to be made, "1" is held.

FIG. 9 shows an example of the diagnostic setting information storage order management table 11120070. The diagnostic setting information storage order management table 11120070 is a table for managing the order of storage of diagnostic setting information concerning the communication data of the brake assist device ECU 11 listed in the transmit data management table 11120020 shown in FIG. 5 and the receive data management table 11120030 shown in FIG. 6. The diagnostic setting information storage order management table 11120070 has a diagnostic setting information storage order ID field 11120071, a CAN_ID field 11120072, and a transmit/receive diagnostic information determination flag field 11120073.

The diagnostic setting information storage order ID field 11120071 holds diagnostic setting information storage order IDs set as information identifiers when diagnostic setting information concerning individual communication data is stored. The CAN_ID field 11120072 holds the CAN_IDs of individual communication data. The transmit/receive diagnostic information determination flag field 11120073 stores flags for determining whether individual communication data are transmit data or receive data. In this field, for transmit data transmitted from the brake assist device ECU 11 to another vehicle control device, "1" is held and, for receive data received by the brake assist device ECU 11 from another vehicle control device, "0" is held.

FIG. 10 shows an example of the previous counter value management table 11120080. The previous counter value management table 11120080 is a table for managing a previous counter value and has a counter name field 11120081 and a counter value field 1112082.

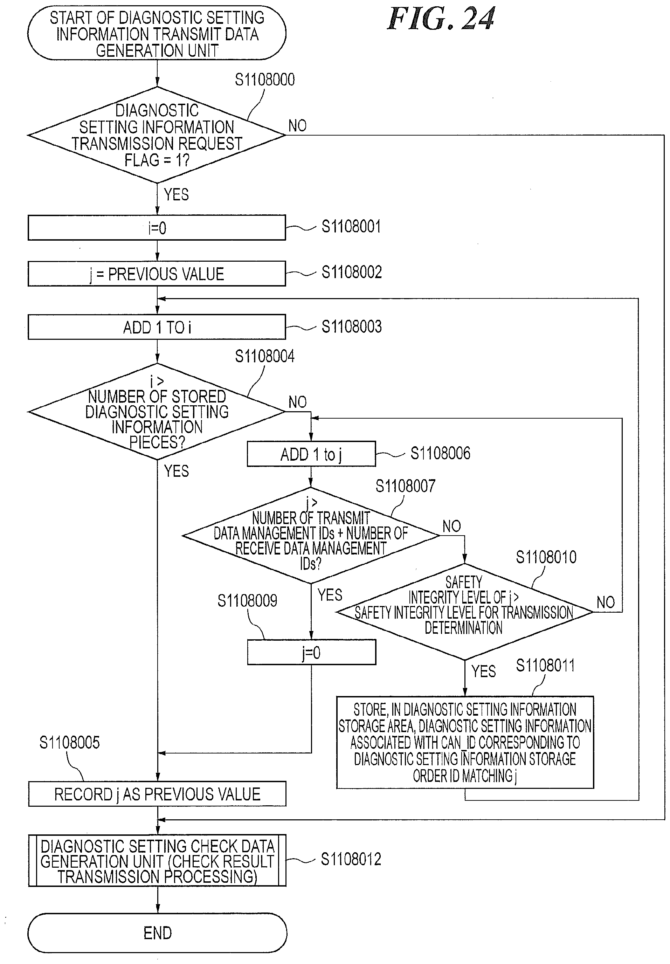

The counter name field 11120081 holds the name of the counter on which the brake assist device ECU 11 holds a previous counter value. The counter value field 1112082 holds the counter value held by the brake assist device ECU 11. In the present example, the previous value of counter j referred to in the flowchart to be described later with reference to FIG. 24 is recorded.

FIG. 11 shows an example of the diagnostic setting information (transmission processing) management table 11120090. The diagnostic setting information (transmission processing) management table 11120090 is a table for managing diagnostic setting combinations applied to the transmit data listed in the transmit data management table 11120020 shown in FIG. 5 and transmitted from the brake assist device ECU 11. The diagnostic setting information (transmission processing) management table 11120090 has a CAN_ID field 11120091, an untransmitted diagnosis execution flag field 11120092, a parity code addition flag field 11120093, a CRC code addition flag field 11120094, and a message counter addition flag field 11120095.

The CAN_ID field 11120091 holds CAN_IDs which are uniquely defined, as data identifiers in the CAN 14, for individual transmit data transmitted from the brake assist device ECU 11. The CAN_IDs defined for individual transmit data and stored in the CAN_ID field 11120091 are the same as those stored in the CAN_ID field 11120023 of the transmit data management table 11120020 shown in FIG. 5.

The untransmitted diagnosis execution flag field 11120092 stores flags for determining whether or not to apply untransmitted diagnosis execution to individual transmit data. For transmit data to which untransmitted diagnosis is not applied, "0" is held in the corresponding location and, for transmit data to which untransmitted diagnosis is applied, "1" is held.

The parity code addition flag field 11120093 stores flags for determining whether or not to apply parity code addition to individual transmit data. For transmit data to which parity addition is not applied, "0" is held in the corresponding location and, for transmit data to which parity addition is applied, "1" is held.

The CRC code addition flag field 11120094 stores flags for determining whether or not to apply CRC code addition to individual transmit data. For transmit data to which CRC code addition is not applied, "0" is held in the corresponding field and, for transmit data to which CRC code addition is applied, "1" is held.

The message counter addition flag field 11120095 stores flags for determining whether or not to apply message counter addition to individual transmit data. For transmit data to which message counter addition is not applied, "0" is held in the corresponding field and, for transmit data to which message counter addition is applied, "1" is held.

As described above, the diagnostic setting information (transmission processing) management table 11120090 has fields for determining whether or not to apply untransmitted diagnosis, parity code addition, CRC code addition, and message counter addition among typical communication diagnosis methods applied to transmit data, but the types of diagnoses applied to transmit data are not limited to the above-described.

FIG. 12 shows an example of the diagnostic setting information (reception processing) management table 11120100. The diagnostic setting information (reception processing) management table 11120100 is a table for managing diagnostic setting combinations applied to the receive data listed in the receive data management table 11120030 shown in FIG. 6 and received by the brake assist device ECU 11. The diagnostic setting information (reception processing) management table 11120100 has a CAN_ID field 11120101, an unreceived diagnosis execution flag field 11120102, a parity check diagnosis flag field 11120103, a CRC check diagnosis flag field 11120104, and a message counter diagnosis flag field 11120105.

The CAN_ID field 11120101 holds CAN_IDs which are uniquely defined, as data identifiers in the CAN 14, for individual receive data received by the brake assist device ECU 11. The CAN_IDs defined for individual receive data and stored in the CAN_ID field 11120101 are the same as those stored in the CAN_ID field 11120033 of the receive data management table 11120030 shown in FIG. 6.

The unreceived diagnosis execution flag field 11120102 stores flags for determining whether or not to apply unreceived diagnosis execution to individual receive data. For receive data to which unreceived diagnosis is not applied, "0" is held in the corresponding location and, for transmit data to which unreceived diagnosis is applied, "1" is held.

The parity code addition flag field 11120103 stores flags for determining whether or not to apply parity check diagnosis to individual receive data. For receive data to which parity check diagnosis is not applied, "0" is held in the corresponding location and, for transmit data to which parity check diagnosis is applied, "1" is held.

The CRC check diagnosis flag field 11120104 stores flags for determining whether or not to apply CRC check diagnosis to individual receive data. For receive data to which CRC check diagnosis is not applied, "0" is held in the corresponding location and, for receive data to which CRC check diagnosis is applied, "1" is held.

The message counter diagnosis flag field 11120105 stores flags for determining whether or not to apply message counter diagnosis to individual receive data. For transmit data to which message counter diagnosis is not applied, "0" is held in the corresponding location and, for transmit data to which message counter diagnosis is applied, "1" is held.

As described above, the diagnostic setting information (reception processing) management table 11120100 has fields for determining whether or not to apply untransmitted diagnosis, parity check diagnosis, CRC check diagnosis, and message counter diagnosis among typical communication diagnosis methods applied to receive data, but the types of diagnoses applied to receive data are not limited to the above-described.

FIG. 13 shows an example of the diagnostic setting information transmission determination criterion management table 11120110. The diagnostic setting information transmission determination criterion management table 11120110 is a table for managing a determination criterion applied to the diagnostic setting information transmitted from the brake assist device ECU 11 to other vehicle control devices and has a transmission determination safety integrity level field 11120111. The transmission determination safety integrity level field 11120111 holds a safety integrity level used as a determination criterion applied to the diagnostic setting information to be transmitted by the brake assist device ECU 11. As described in the foregoing, there are four safety integrity levels represented by A, B, C, and D, respectively. In this field, the lowest safety integrity level is represented by "A" and the highest safety integrity level is represented by "D." A high safety integrity level indicates that the probability of the data allocated with the safety integrity level showing an abnormal value is high or that, when the data is abnormal, it greatly affects the system. In the present example, the diagnostic setting information transmission determination criterion held in the diagnostic setting information transmission determination criterion management table 11120110 is based on the safety integrity level standard ASIL, but the determination criterion need not necessarily be based on the ASIL.

FIG. 14 shows an example of the diagnostic setting check result storage table 11140010. The diagnostic setting check result storage table 11140010 is a table for storing the diagnostic setting check results for communication data communicated by the brake assist device ECU 11 and has a key-on count field 11140011, a setting check result storage order ID field 11140012, a CAN_ID field 11140013, a safety integrity level field 11140014, a transmission/reception determination flag field 11140015, and a diagnostic setting check result field 11140016.

The key-on count field 11140011 represents the number of times the ignition key of the vehicle mounted with the vehicle control system 1 was turned on. The setting check result storage order ID field 11140012 holds the identifiers for determining the order in which the diagnostic setting check results for individual communication data communicated by the brake assist device ECU 11 are stored. The CAN_ID field 11140013 holds the CAN_IDs of individual communication data. The safety integrity level field 1114014 represents the safety integrity levels allocated to individual communication data based on the ASIL. The safety integrity levels represented need not necessarily be based on the ASIL.

The transmission/reception determination flag field 11140015 stores flags used to determine whether each check result stored in the table is a receive data diagnostic setting check result or a transmit data diagnostic setting check result. For a receive data diagnostic setting check result, "0" is held and, for a transmit data diagnostic setting check result, "1" is held.

The diagnostic setting check result field 11140016 holds the diagnostic setting check results for the corresponding communication data included in the table. When diagnostic settings for certain communication data match between the transmitting side and the receiving side, that is, when the diagnostic settings for certain communication data of the brake assist device ECU 11 match the diagnostic settings at the other vehicle control device to receive or transmit the communication data from or to the brake assist device ECU 11, "0" is held and, when the diagnostic settings on the two sides do not match, "1" is held.

FIG. 15 shows an example of the key-on count management table 11140020. The key-on count management table 11140020 is a table for holding the number of times the ignition key of the vehicle mounted with the vehicle control system 1 was turned on and has a key-on count field 11140021.

The tables stored in the storage area 1112 of the brake assist device ECU 11 that is an example of a vehicle control device according to the present invention have been described.

The configuration of data transmitted or received by the brake assist device ECU 11 via the CAN 14 will be described in the following.

FIG. 16 is a diagram showing an example configuration of the diagnostic setting information transmit data 140010 stored in the diagnostic setting check data management table 11120040 shown in FIG. 7. The diagnostic setting information transmit data 140010 is configured with the following fields used to store diagnostic setting information to be transmitted from the brake assist device ECU 11 to other vehicle control devices via the CAN 14: CAN_ID field 140011, diagnostic setting information storage area 1 field 140012, diagnostic setting information storage area 2 field 140013, diagnostic setting information storage area 3 field 140014, and diagnostic setting information storage area 4 field 140015.

The CAN_ID field 140011 holds the CAN _IDs set as a unique identifier for the diagnostic setting information transmit data 140010. The value held in this field is the same as the CAN_ID value of the diagnostic setting information transmit data 140010 shown in FIG. 7, i.e. "100." The diagnostic setting information storage area 1 field 140012, diagnostic setting information storage area 2 field 140013, diagnostic setting information storage area 3 field 140014, and diagnostic setting information storage area 4 field 140015 are identically configured.

The diagnostic setting information storage area 1 field 140012 is configured, for example, with a CAN_ID field 141011, a transmission/reception determination flag field 141012, and a diagnostic setting information field 141013 as shown in a lower part of FIG. 16.

The CAN_ID field 141011 represents the CAN_ID of the communication data to which the diagnostic setting information stored in the diagnostic setting information storage area 1 field 140012 corresponds. The transmission/reception determination flag field 141012 represents a flag to determine whether the corresponding diagnostic setting information concerns receive data or transmit data. In this field, when the diagnostic setting information concerns receive data, "0" is held and, when the diagnostic setting information concerns transmit data, "1" is held. The diagnostic setting information field 141013 stores information on the diagnostic setting combination represented by the diagnostic setting information. The corresponding diagnostic setting information stored in the diagnostic setting information (transmission processing) management table 11120090 shown in FIG. 11 or in the diagnostic setting information (reception processing) management table 11120100 shown in FIG. 12 is stored in this field.

The detailed configuration of the diagnostic setting information field 141013 is identical with the data configuration of the untransmitted diagnosis execution flag field 11120092 to the message counter addition flag field 11120095 of the diagnostic setting information (transmission processing) management table 11120090 (see FIG. 11) or the unreceived diagnosis execution flag field 11120102 to the message counter addition flag field 11120105 of the diagnostic setting information (reception processing) management table 11120100 (see FIG. 12). Namely, the four bits of data held in the diagnostic setting information field 141013 correspond to the four bits of data held in the diagnostic setting information (transmission processing) management table 11120090 or the diagnostic setting information (reception processing) management table 11120100.

The above-described diagnostic setting information transmit data 140010 concerning the communication data of the brake assist device ECU 11 is transmitted from the brake assist device ECU 11 to other vehicle control devices connected with the brake assist device ECU 11 via the CAN 14. Similarly, the diagnostic setting information transmit data concerning the communication data of the other vehicle control devices are transmitted from the other vehicle control devices to the brake assist device ECU 11. In this way, the diagnostic setting information transmit data concerning the communication data of plural vehicle control devices are exchanged between the plural vehicle control devices.

FIG. 17 is a diagram showing an example configuration of the diagnostic setting check result request data 140020 held in the diagnostic setting check data management table 11120040 shown in FIG. 7. The diagnostic setting check result request data 140020 has a CAN_ID field 140021 and a request target CAN_ID field 140022 making up a data configuration to allow the diagnostic setting check result analysis tool 2 to request the brake assist device ECU 11 to transmit diagnostic setting check results.

The diagnostic setting check result request data 140020 shown in FIG. 17 is normally transmitted from the diagnostic setting check result analysis tool 2 connected to the CAN 14. When the data is received by plural vehicle control devices, diagnostic setting check results concerning the respective communication data are transmitted from the plural vehicle control devices to the diagnostic setting check result analysis tool 2. However, the diagnostic setting check result request data 140020 may be transmitted from a higher-level control device (not shown) connected to the CAN 14 or from one of the plural vehicle control devices connected to the CAN 14 to other vehicle control devices. Namely, it may be arranged such that, in response to the diagnostic setting check result request data 140020 transmitted from a vehicle control device connected to the CAN 14, other vehicle control devices transmit diagnostic setting check results.

The CAN_ID field 140021 holds the CAN_ID set as a unique identifier for the diagnostic setting check result request data 140020. In this field, the CAN_ID value included in the diagnostic setting check result request data 140020 shown in FIG. 7, i.e. "101," is held. The request target CAN_ID field 140022 holds the CAN_ID of the communication data that is the target of the request for a diagnostic setting check result.

FIG. 18 is a diagram showing an example configuration of the diagnostic setting check result transmit data 140030 held in the diagnostic setting check data management table 11120040 shown in FIG. 7. The diagnostic setting check result transmit data 140030 has a CAN_ID field 140031, a diagnostic setting check result storage area 1 field 140032, a diagnostic setting check result storage area 2 field 140033, a diagnostic setting check result storage area 3 field 140034, and a diagnostic setting check result storage area 4 field 140035 making up a data configuration to allow the diagnostic setting check results concerning the communication data of the brake assist device ECU 11 to be transmitted to the diagnostic setting information check result analysis tool 2.

The CAN_ID field 140031 holds the CAN_ID set as a unique identifier for the diagnostic setting check result transmit data 140030. In this field, the CAN_ID value included in the diagnostic setting check result transmit data 140030 shown in FIG. 7, i.e. "102," is held. The diagnostic setting check result storage area 1 field 140032, diagnostic setting check result storage area 2 field 140033, diagnostic setting check result storage area 3 field 140034, and diagnostic setting check result storage area 4 field 140035 are identically configured.

The diagnostic setting check result storage area 1 field 140032 is configured, for example, with a CAN_ID field 141031, a key-on count field 141032, a safety integrity level field 141033, a transmission/reception determination flag field 141034, and a diagnostic setting check result field 141035 as shown in a lower part of FIG. 18.

The CAN_ID field 141031 represents the CAN_ID of the communication data to which the diagnostic setting check result stored in the diagnostic setting check result storage area 1 field 140032 corresponds. The key-on count field 141032 represents the number of times the ignition key of the vehicle was turned on as of the time the corresponding check result was obtained. The safety integrity level field 141033 represents the safety integrity level allocated to the corresponding communication data. The transmission/reception determination flag field 141034 represents a flag for determining whether the corresponding diagnostic setting check result concerns receive data or transmit data. In this field, when the corresponding diagnostic setting check result concerns receive data, "0" is held and, when the corresponding diagnostic setting check result concerns transmit data, "1" is held. The diagnostic setting check result field 141035 stores a diagnostic setting check result. The corresponding one of the diagnostic setting check results held in the diagnostic setting check result storage table 11140010 shown in FIG. 14 is stored in this field. Namely, when the diagnostic settings match between the transmitting side and the receiving side, "0" is held and, when they do not match, "1" is held.

FIG. 19 is a diagram showing an example configuration of the diagnostic setting abnormality notification data 140040 held in the diagnostic setting check data management table 11120040 shown in FIG. 7. The diagnostic setting abnormality notification data 140040 has a CAN_ID field 140041 and a data field 140042 making up a data configuration for notifying the meter ECU 13 as to whether diagnostic setting abnormality exists concerning the respective communication data of the brake assist device ECU 11.

The CAN_ID field 140041 holds the CAN_ID set as a unique identifier for the diagnostic setting abnormality notification data 140040. The value held in this field is the same as the CAN_ID value included in the diagnostic setting abnormality notification data 140040 shown in FIG. 7, i.e. "103." The data field 140042 stores prescribed data, for example, a unique device ID allocated to the brake assist device ECU 11, but the data stored in this field is not limited to such data.

The above-described diagnostic setting abnormality notification data 140040 is received, for example, by the meter ECU 13, the diagnostic setting information check result analysis tool 2, and a higher-level ECU, for example, a vehicle ECU (not shown). When the data indicates abnormality, the corresponding processing is performed.

The configurations of the data transmitted and received via the CAN 14 by the brake assist device ECU that is an example of a vehicle control device according to the present invention have been described.

In the following, various tables stored in the data storage area 1307 of the meter ECU 13 will be described.

FIG. 20 is a diagram showing an example of the receive data management table 13070010 for the meter ECU 13. The receive data management table 13070010 is a table for managing the CAN_ID and safety integrity level of receive data received by the meter ECU 13 from another vehicle control device via the CAN 14. The receive data management table 13070010 has a name field 13070011, a CAN_ID field 13070012, and a safety integrity level field 13070013.

The name field 13070011 holds the name of data received by the meter ECU 13. In the present example, only the diagnostic setting abnormality notification data 140040, shown in FIGS. 7 and 19, transmitted from the brake assist device ECU 11 to the meter ECU 13 is shown as the receive data received by the meter ECU 13, but the receive data received by the meter ECU 13 is not limited to the diagnostic setting abnormality notification data 140040. The CAN_ID field 13070012 holds the CAN_ID of the receive data received by the meter ECU 13 from another vehicle control device via the CAN 14. In this field, the CAN_ID value included in the diagnostic setting abnormality notification data 140040 shown in FIGS. 7 and 19, i.e. "103," is held. The safety integrity level field 13070013 represents the safety integrity level allocated to the receive data, for example, based on the ASIL. The safety integrity level represented need not necessarily be based on the ASIL.

FIG. 21 shows an example of the warning lamp on flag management table 13070020. The warning lamp on flag management table 1307002 is a table for determining whether or not the meter ECU 13 turns the warning lamp 1308 on and has a warning lamp on flag field 13070021. When the diagnostic setting abnormality notification data 140040, shown in FIG. 20, received from the brake assist device ECU 11 or another vehicle control device indicates no transmission abnormality, "0" is held and, when abnormality is detected in the diagnostic setting information concerning another vehicle control device, "1" is held and the warning lamp on flag is lit.

The above-described tables are stored in a storage area 1309 of the monitor ECU 13 that is an example of a vehicle control device according to the present invention.

The operation flows of the programs stored in the program area 1103 of the brake assist device ECU 11 will be described in the following.

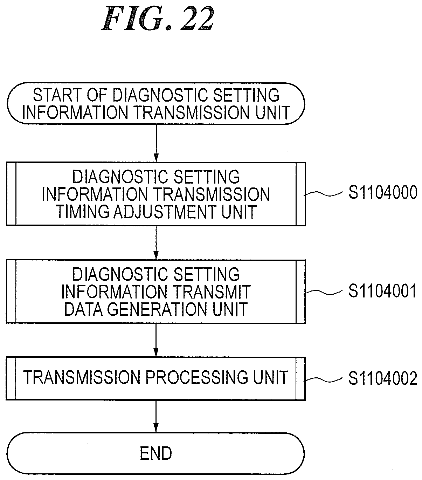

FIG. 22 shows the operation flow of the diagnostic setting information transmission unit 1104 listed in FIG. 2. In the operation flow, the arithmetic unit 1101 calls and executes the diagnostic setting information transmission program 11041, thereby functioning as the diagnostic setting information transmission unit 1104. Each step shown in FIG. 22 will be described in the following.

### (FIG. 22: Step 1104000)

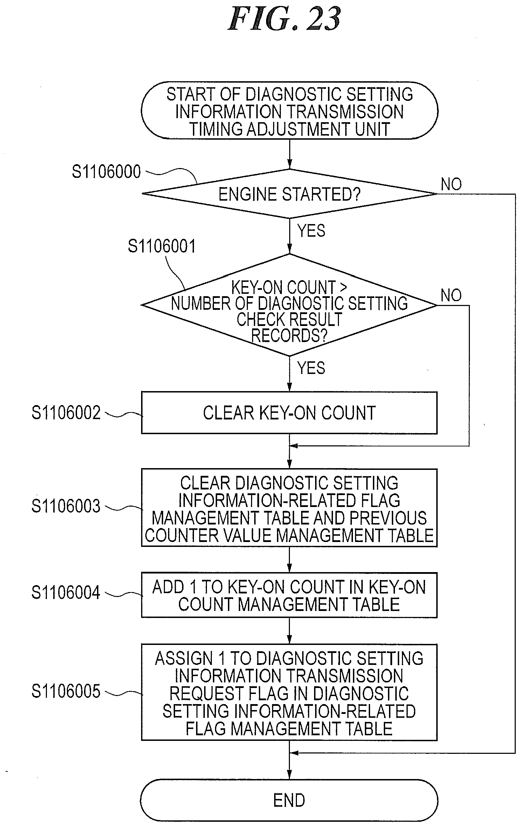

The diagnostic setting information transmission unit 1104 calls the operation flow of the diagnostic setting information transmission timing adjustment unit 1106 to be described later with reference to FIG. 23. This adjusts the timing of diagnostic setting information transmission.

### (FIG. 22: Step 1104001)

The diagnostic setting information transmission unit 1104 calls the operation flow of the diagnostic setting information transmit data generation unit 1107 to be described later with reference to FIG. 24. This generates diagnostic setting information transmit data for transmitting the diagnostic setting information concerning individual communication data of the brake assist device ECU 11 to other vehicle control devices.

### (FIG. 22: Step 1104002)

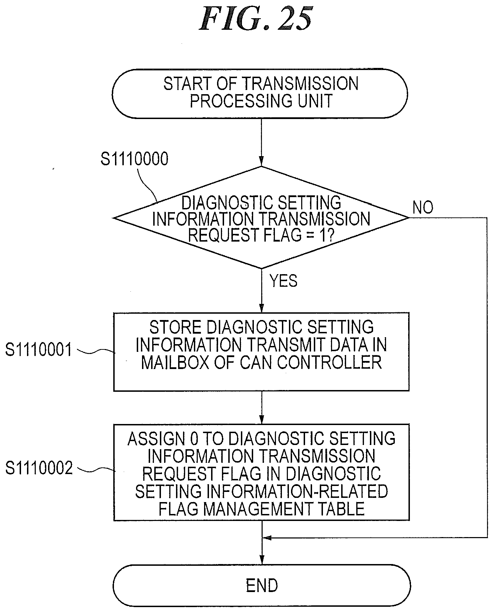

The diagnostic setting information transmission unit 1104 calls the operation flow of the transmission processing unit 1110 to be described later with reference to FIG. 25. This makes it possible to transmit the diagnostic setting information transmit data generated in step 1104001 to other vehicle control devices.

Through the above steps, the diagnostic setting information for determining whether or not the diagnostic settings applied to communication data match between the transmitting side and the receiving side can be transmitted from the brake assist device ECU 11 to other vehicle control devices.

FIG. 23 shows the operation flow of the diagnostic setting information transmission timing adjustment unit 1106 (see FIG. 2). In the operation flow, the arithmetic unit 1101 calls and executes the diagnostic setting information transmission timing adjustment program 11061 listed in FIG. 2, thereby functioning as the diagnostic setting information transmission timing adjustment unit 1106. Each step shown in FIG. 23 will be described in the following.

### (FIG. 23: Step 1106000)

The diagnostic setting information transmission timing adjustment unit 1106 determines whether the engine has just been started. When it is determined that the engine has just been started, the diagnostic setting information transmission timing adjustment unit 1106 advances to step 1106001, or otherwise ends the operation flow shown in FIG. 23. In the case of a motor-driven vehicle such as an electric vehicle or a hybrid electric vehicle, it is preferable to determine whether or not the motor drive system, not the engine, for driving the vehicle has just been started.

### (FIG. 23: Step 1106001)

The diagnostic setting information transmission timing adjustment unit 1106 determines whether or not the key-on count recorded in the key-on count field 11140021 of the key-on count management table 11140020 (see FIG. 15) exceeds the number of diagnostic setting check result records 11120018 recorded in the table size management table 11120010 shown in FIG. 4. The diagnostic setting information transmission timing adjustment unit 1106 advances to step 1106002 when it is determined that the key-on count exceeds the number of diagnostic setting check result records 11120018, or otherwise advances to step 1106003.

### (FIG. 23: Step 1106002)

The diagnostic setting information transmission timing adjustment unit 1106 clears the key-on count by assigning 0's to the key-on count field 11140021 of the key-on count management table 11140020.

### (FIG. 23: Step 1106003)

The diagnostic setting information transmission timing adjustment unit 1106 clears the diagnostic setting information-related flag management table 11120060 (see FIG. 8) and the previous counter value management table 11120080 (see FIG. 10) by assigning 0's to all flags in the former table and to the counter value held in the latter table.

### (FIG. 23: Step 1106004)

The diagnostic setting information transmission timing adjustment unit 1106 adds 1 to the key-on count recorded in the key-on count field 11140021 of the key-on count management table 11140020 (see FIG. 15). In this way, every time the engine or motor drive system of the vehicle is started by turning on the ignition key and the vehicle control system 1 starts operating, the key-on count is incremented.

### (FIG. 23: Step 1106005)

The diagnostic setting information transmission timing adjustment unit 1106 assigns 1 to the flag value recorded in the diagnostic setting information transmission request flag field 11120061 of the diagnostic setting information-related flag management table 11120060 shown in FIG. 8.

Through the above steps, the timing of diagnostic setting information transmission can be adjusted. For descriptive convenience, the diagnostic setting information transmission timing adjustment unit 1106 is described as transmitting diagnostic setting information by assigning 1 to the diagnostic setting information transmission request flag field 11120061 after the engine is started, but the timing of diagnostic setting information transmission is not limited to the above-described timing. For example, 1 may be periodically assigned to the diagnostic setting information transmission request flag field 11120061 causing diagnostic setting information to be transmitted periodically.

FIG. 24 shows the operation flow of the diagnostic setting information transmit data generation unit 1107 (see FIG. 2). In the operation flow, the arithmetic unit 1101 calls and executes the diagnostic setting information transmit data generation program 11071, thereby functioning as the diagnostic setting information transmit data generation unit 1107. Each step shown in FIG. 24 will be described in the following.

### (FIG. 24: Step 1108000)

The diagnostic setting information transmit data generation unit 1107 determines whether or not the flag setting recorded in the diagnostic setting information transmission request flag field 11120061 of the diagnostic setting information-related flag management table 11120060 (see FIG. 8) is 1. When the flag setting is 1, the diagnostic setting information transmit data generation unit 1107 advances to step 1108001, or otherwise ends the operation flow shown in FIG. 24.

### (FIG. 24: Step 1108001)

The diagnostic setting information transmit data generation unit 1107 assigns 0 to counter i.

### (FIG. 24: Step 1108002)

The diagnostic setting information transmit data generation unit 1107 assigns the previous value recorded in the previous counter value field 1112082 of the previous counter value management table 11120080 (see FIG. 10) to counter j.

### (FIG. 24: Step 1108003)

The diagnostic setting information transmit data generation unit 1107 adds 1 to the counter i.

### (FIG. 24: Step 1108004)

The diagnostic setting information transmit data generation unit 1107 determines whether or not the counter i value exceeds the number of stored diagnostic setting information pieces 1110017, i.e. 4, stored in the table size management table 11120010 (see FIG. 4). The diagnostic setting information transmit data generation unit 1107 advances to step 1108005 when the counter i value exceeds the number of stored diagnostic setting information pieces 11120017, or otherwise advances to step 1108006.

### (FIG. 24: Step 1108005)

The diagnostic setting information transmit data generation unit 1107 records the current counter j value to the counter value field 1112082 of the previous counter value management able 11120080 shown in FIG. 10, thereby updating the previous value of the counter j, then advances to step 1108012.

### (FIG. 24: Step 1108006)

The diagnostic setting information transmit data generation unit 1107 adds 1 to the counter j.

### (FIG. 24: Step 1108007)

The diagnostic setting information transmit data generation unit 1107 determines whether or not the counter j value exceeds the sum of the number of transmit data management IDs 11120013 and the number of receive data management IDs 11120014, i.e. 4, stored in the table size management table 11120010 shown in FIG. 4. The diagnostic setting information transmit data generation unit 1107 advances to step 1108009 when it is determined that the counter j value exceeds the sum of the number of transmit data management IDs 11120013 and the number of receive data management IDs 11120014, or otherwise advances to step 1108010.

### (FIG. 24: Step 1108009)

The diagnostic setting information transmit data generation unit 1107 assigns 0 to the counter j.

### (FIG. 24: Sep 1108010)

The diagnostic setting information transmit data generation unit 1107 identifies the CAN_ID of the communication data corresponding to the diagnostic setting information storage order ID whose value recorded in the diagnostic setting information storage order ID field 11120071 of the diagnostic setting information storage order ID management table 11120070 equals the current counter j value. The diagnostic setting information transmit data generation unit 1107 then determines whether or not the safety integrity level set on the communication data allocated with the identified CAN_ID exceeds the safety integrity level recorded as a determination criterion in the transmission determination safety integrity level field 11120111 of the diagnostic setting information transmission determination criterion management table 11120110 (see FIG. 13). The diagnostic setting information transmit data generation unit 1107 advances to step 1108011 when it is determined that the former safety integrity level exceeds the latter safety integrity level, or otherwise advances to step 1108006. In this way, the diagnostic setting information transmit data generation unit 1107 selects diagnostic setting information for use in generating diagnostic setting information transmit data based on the safety integrity levels pre-set for individual communication data.

### (FIG. 24: Step 1108011)

The diagnostic setting information transmit data generation unit 1107 stores, in one of the diagnostic setting information storage areas included in the diagnostic setting information transmit data 140010 shown in FIG. 16, the diagnostic setting information concerning the communication data allocated with the CAN_ID that is stored in the diagnostic setting information storage order ID field 11120071 of the diagnostic setting information storage order management table 11120070 shown in FIG. 9 and that matches the current counter j value, i.e. the diagnostic setting information concerning the communication data that was the target of safety integrity level determination in step 1108010. In the present example, the diagnostic setting information concerning the communication data is stored in the smallest-numbered, vacant field out of the diagnostic setting information storage area 1 field 140012 to the diagnostic setting information storage area 4 field 140015. Furthermore, in this step, the CAN_ID of the communication data and the transmission/reception determination flag indicating whether the communication data is transmit data or receive data are also stored in the data configuration shown in FIG. 16. Thus, the diagnostic setting information transmit data 140010 as shown in FIG. 16 is generated by sequentially storing the diagnostic setting information concerning individual communication data. The diagnostic setting information transmit data generation unit 1107 subsequently advances to step 1108003.

### (FIG. 24: Step 1108012)

The diagnostic setting information transmit data generation unit 1107 stores the diagnostic setting information transmit data 140010 generated as described above, for example, in a transmission buffer (not shown) included in the data storage area 1112 (see FIG. 2).

Through the above steps, the diagnostic setting information transmit data generation unit 1107 can generate the diagnostic setting information transmit data 140010 as shown in FIG. 16.

FIG. 25 is the operation flow of the transmission processing unit 1110 transmitting the diagnostic setting information transmit data 140010 generated through the operation flow shown in FIG. 24. In the operation flow, the arithmetic unit 1101 calls and executes the transmission processing program 11101 listed in FIG. 2, thereby functioning as the transmission processing unit 1110. Each step shown in FIG. 25 will be described in the following.

### (FIG. 25: Step 1110001)

The transmission processing unit 1110 determines whether or not the flag recorded in the diagnostic setting information transmission request flag field 11120061 of the diagnostic setting information-related flag management table 11120060 shown in FIG. 8 is set to 1. When the flag setting is 1, the transmission processing unit 1110 advances to step 1110001, or otherwise ends the operation flow shown in FIG. 25.

### (FIG. 25: Step 1110001)

The transmission processing unit 1110 stores the diagnostic setting information transmit data 140010 that was stored in a transmission buffer in step 1108012 shown in FIG. 24 in a mailbox (not shown) of the CAN controller 1118. This allows the diagnostic setting information transmit data 140010 generated in the operation flow shown in FIG. 24 to be transmitted from the CAN controller 1118 to other vehicle control devices via the CAN 14.

### (FIG. 25: Step 1110002)

The transmission processing unit 1110 assigns 0 to the diagnostic setting information transmission request flag field 11120061 of the diagnostic setting information-related flag management table 11120060 shown in FIG. 8.

Through the above steps, the transmission processing unit 1110 can transmit diagnostic setting information to communication partners, i.e. other vehicle control devices, via the CAN 14.

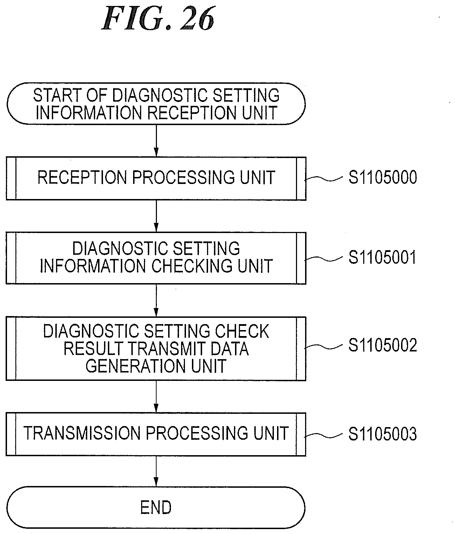

FIG. 26 shows the operation flow of the diagnostic setting information reception unit 1105 (see FIG. 2). In the operation flow, the arithmetic unit 1101 calls and executes the diagnostic setting information reception program 11051 listed in FIG. 2, thereby functioning as the diagnostic setting information reception unit 1105. Each step shown in FIG. 26 will be described in the following.

### (FIG. 26: Step 1105000)

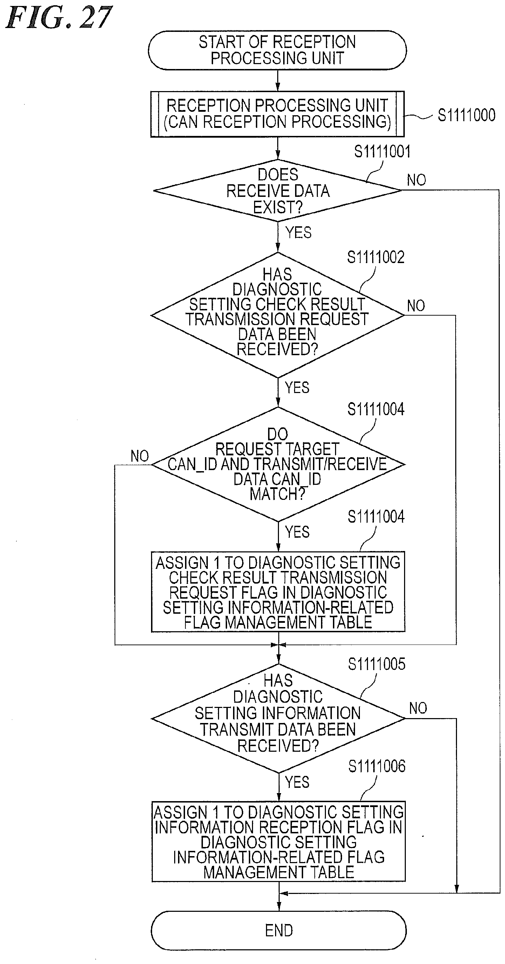

The diagnostic setting information reception unit 1105 calls the operation flow of the reception processing unit 1111 to be described later with reference to FIG. 27 and, thereby, obtains the diagnostic setting information transmitted from another vehicle control device. The diagnostic setting information reception unit 1105 also receives the diagnostic setting check result request data transmitted from the diagnosis check analysis tool 2.

### (FIG. 26: Step 1105001)

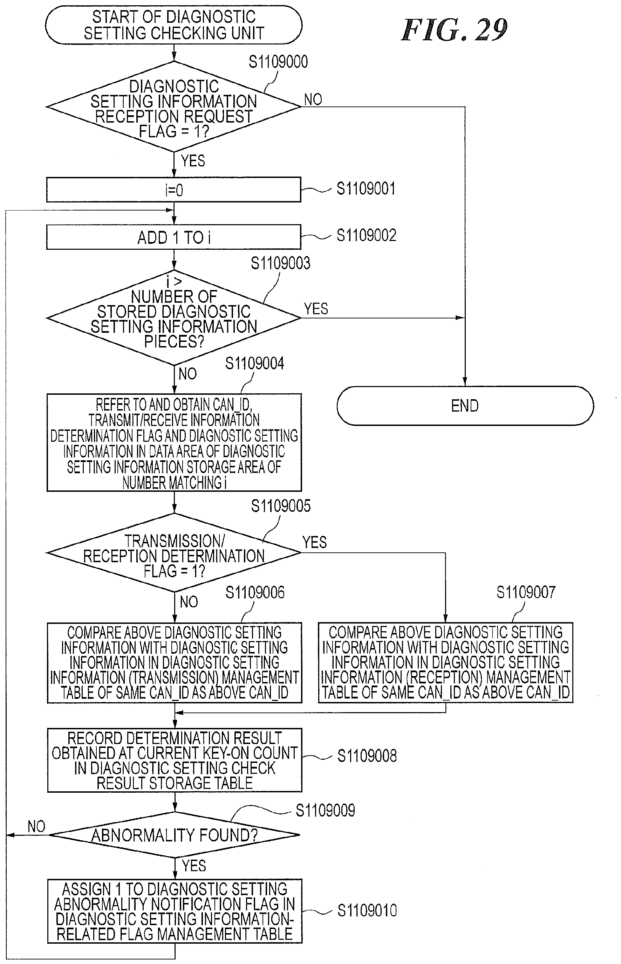

The diagnostic setting information reception unit 1105 calls the operation flow of the diagnostic setting checking unit 1108 to be described later with reference to FIG. 29. As a result, the diagnostic setting information from another vehicle control device obtained in step 1105000 and the diagnostic setting information of the brake assist device ECU 11 are compared to determine whether or not the diagnostic settings for individual communication data of the brake assist device ECU 11 match between the transmitting side and the receiving side.

### (FIG. 26: Step 1105002)

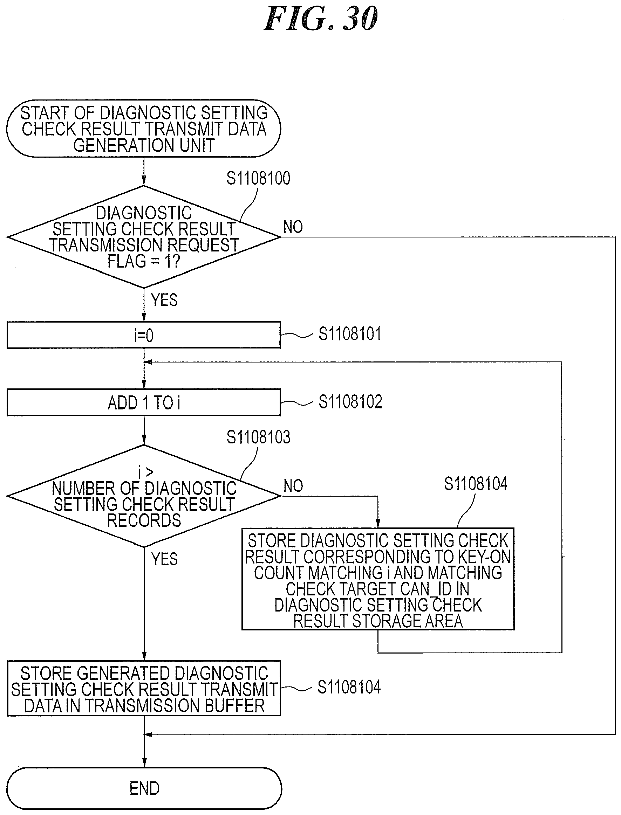

The diagnostic setting information reception unit 1105 calls the operation flow of the diagnostic setting check result transmit data generation unit 1109 to be described later with reference to FIG. 30. As a result, the diagnostic setting check result transmit data to be transmitted as the diagnostic setting check result obtained in step 110501 to the diagnostic setting information check result analysis tool 2 is generated.

### (FIG. 26: Step 1105003)

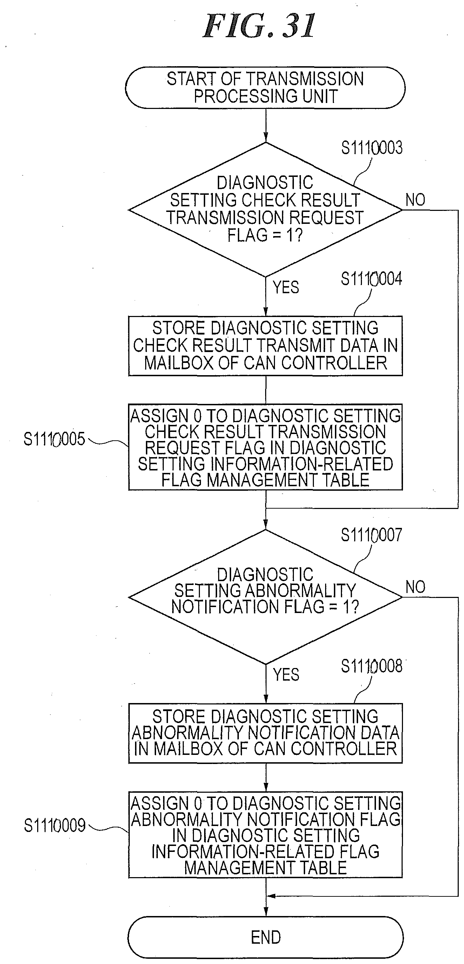

The diagnostic setting information reception unit 1105 calls the operation flow of the transmission processing unit 1110 to be described later with reference to FIG. 31. As a result, the diagnostic setting check result transmit data generated in step 1105002 is transmitted to the diagnostic setting information check result analysis tool 2. When diagnostic setting abnormality exists, notice of the abnormality can be given to the meter ECU 13.

Through the above steps, the diagnostic setting information transmitted from another vehicle control device can be received and, using the diagnostic setting information, whether or not the diagnostic settings match between the transmitting side and the receiving side can be determined. Also, the diagnostic setting check result request data from the diagnostic setting check result analysis tool 2 can be received and, in response, the diagnostic setting check result transmit data can be transmitted to the diagnostic setting check result analysis tool 2.

FIG. 27 shows the operation flow of the reception processing unit 1111 (see FIG. 2). In the operation flow, the arithmetic unit 1101 calls and executes the reception processing program 11111 listed in FIG. 2, thereby functioning as the reception processing unit 1111. Each step shown in FIG. 27 will be described in the following.

### (FIG. 27: Step 1111000)

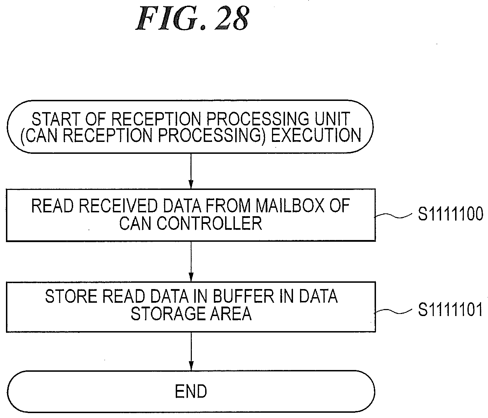

By calling and executing the operation flow of the CAN reception processing to be described later with reference to FIG. 28, the reception processing unit 1111 receives the data transmitted from another vehicle control device or the diagnostic setting check result analysis tool 2.

### (FIG. 27: Step 1111001)

The reception processing unit 1111 determines whether or not any receive data was obtained in step 1111000. When receive data exists, the reception processing unit 1111 advances to step 1111002, or otherwise ends the operation flow shown in FIG. 27.

### (FIG. 27: Sep 1111002)

The reception processing unit 1111 determines whether or not the receive data is the diagnostic setting check result request data 140020 from the diagnostic setting check result analysis tool 2 and is configured as shown in FIG. 17. The reception processing unit 1111 advances to step 1111003 when the receive data is the diagnostic setting check result request data 140020, or otherwise advances to step 1111004.

### (FIG. 27: Step 1111003)

The reception processing unit 1111 determines whether or not the CAN_ID value stored in the request target CAN-ID field 140022 of the received diagnostic setting check result request data 140020 matches any one of the communication data CAN_IDs stored in the CAN_ID field 11120072 of the diagnostic setting information storage order management table 11120070 shown in FIG. 9. The reception processing unit 1111 advances to step 1111004 when there is a match, or otherwise advances to step 1111005.

### (FIG. 27: Step 1111004)

The reception processing unit 1111 assigns 1 to the flag value recorded in the diagnostic setting check result transmission request flag field 11120063 of the diagnostic setting information-related flag management table 11120060 (see FIG. 8).

### (FIG. 27: Step 1111005)

The reception processing unit 1111 determines whether or not the received data is diagnostic setting information transmit data transmitted from another vehicle control device. When the received data is such diagnostic setting information transmit data, the reception processing unit 1111 advances to step 1111006, or otherwise ends the operation flow shown in FIG. 27. The diagnostic setting information transmit data transmitted from another vehicle control device is configured similarly to the diagnostic setting information transmit data 140010, shown in FIG. 16, of the brake assist device ECU 11 and includes the diagnostic setting information concerning the communication data of the vehicle control device. The transmit data from the brake assist device ECU 11 is handled as receive data at the vehicle control device on the receiving side. Therefore, the diagnostic setting information transmit data transmitted from the vehicle control device includes the diagnostic setting information corresponding to the diagnostic setting information concerning the transmit data of the brake assist device ECU 11 as the diagnostic setting information concerning the receive data. Also, the receive data received by the brake assist device ECU 11 is handled as transmit data at the vehicle control device on the transmitting side. Therefore, the diagnostic setting information transmit data transmitted from the vehicle control device includes the diagnostic setting information corresponding to the diagnostic setting information concerning the receive data received by the brake assist device ECU 11 as the diagnostic setting information concerning the transmit data.

### (FIG. 27: Step 1111006)

The reception processing unit 1111 assigns 1 to the flag value recorded in the diagnostic setting information reception flag field 11120062 of the diagnostic setting information-related flag management table 11120060 shown in FIG. 8.

Through the above steps, the reception processing unit 1111 can receive the diagnostic setting information from another vehicle control device. It can also obtain a diagnostic setting check result transmission request from the diagnostic setting check result analysis tool 2.

FIG. 28 shows the operation flow of the CAN reception processing called and executed in the above step 1111000. Each step shown in FIG. 28 will be described in the following.

### (FIG. 28: Step 1111100)

The reception processing unit 1111 reads out the data received via the CAN 14 from the mailbox (not shown) of the CAN controller 1118. The data is either the diagnostic setting information transmit data transmitted from another vehicle control device or the diagnostic setting check result request data 140020 transmitted from the diagnostic setting check result analysis tool 2.

### (FIG. 28: Step 1111101)

The reception processing unit 1111 stores the data read out in step 1111100 in a reception buffer (not shown) in the data storage area 1112.

Through the above steps, the reception processing unit 1111 can receive, via the CAN 14, the diagnostic setting information transmit data transmitted from another vehicle control device and the diagnostic setting check result request data 140020 transmitted from the diagnostic setting check result analysis tool 2.

FIG. 29 shows the operation flow of the diagnostic setting checking unit 1108 (see FIG. 2). In the operation flow, the arithmetic unit 1101 calls and executes the diagnostic setting checking program 11081 listed in FIG. 2, thereby functioning as the diagnostic setting checking unit 1108. Each step shown in FIG. 29 will be described in the following.

### (FIG. 29: Step 1109000)

The diagnostic setting checking unit 1108 determines whether or not the flag setting recorded in the diagnostic setting information reception flag field 11120062 of the diagnostic setting information-related flag management table 11120060 (see FIG. 8) is 1. When the flag setting is 1, the diagnostic setting checking unit 1108 advances to step 1109001, or otherwise ends the operation flow shown in FIG. 29.

### (FIG. 29: Step 1109001)

The diagnostic setting checking unit 1108 assigns 0 to counter i. This counter i is different from the counter i used in the operation flow shown in FIG. 24.

### (FIG. 29: Step 1109002)

The diagnostic setting checking unit 1108 adds 1 to the counter i.

### (FIG. 29: Step 1109003)

The diagnostic setting checking unit 1108 determines whether or not the counter i value exceeds the number of stored diagnostic setting information pieces 11120017 stored in the table size management table 11120010 (see FIG. 4), i.e. 4. The diagnostic setting checking unit 1108 ends the operation flow shown in FIG. 29 when the counter i value exceeds the number of stored diagnostic setting information pieces, or otherwise advances to step 1109004.

### (FIG. 29: Step 1109004)

The diagnostic setting checking unit 1108 extracts, from the diagnostic setting information transmit data of another vehicle control device that was stored in the reception buffer in step 1111101 shown in FIG. 28, the data stored in the diagnostic setting information storage area (out of the diagnostic setting information storage areas 1 to 4 shown in FIG. 16) of the number matching the counter i value. Namely, the diagnostic setting checking unit 1108 refers to the CAN_ID value stored in the CAN_ID field 141011, the value of the transmit/receive information determination flag stored in the transmit/receive information determination flag field 141012, and the diagnostic setting information value stored in the diagnostic setting information field 141013 that are included in the diagnostic setting information transmit data from another vehicle control device and thereby obtains the values. The diagnostic setting information transmit data from another vehicle control device that is referred to in this step is configured similarly to the diagnostic setting information transmit data 140010 of the brake assist device ECU 11 shown in FIG. 16.

### (FIG. 29: Step 1109005)

The diagnostic setting checking unit 1108 determines whether or not the setting of the transmit/receive information determination flag obtained in the above step 1109004 is 1. When the flat setting is 1, namely, when the diagnostic setting information concerns the transmit data of another vehicle control device, the diagnostic setting checking unit 1108 advances to step 1109007. On the other hand, when the flag setting is not 1 but 0, namely, when the diagnostic setting information concerns the receive data of another vehicle control device, the diagnostic setting checking unit 1108 advances to step 1109006.

### (FIG. 29: Step 1109006)

The diagnostic setting checking unit 1108 compares the values of the diagnostic setting information obtained in the above step 1109004 with the values recorded in the diagnostic setting information (transmission processing) management table 11120090 (see FIG. 11) of the diagnostic setting information (the data values stored in the untransmitted diagnosis execution flag field 11120092 to the message counter addition flag field 11120095) concerning the transmit data allocated with the CAN_ID obtained in the above step 1109004.

### (FIG. 29: Step 1109007)

The diagnostic setting checking unit 1108 compares the values of the diagnostic setting information obtained in the above step 1109004 with the values recorded in the diagnostic setting information (reception processing) management table 11120100 (see FIG. 12) of the diagnostic setting information (the data values stored in the unreceived diagnosis execution flag field 11120102 to the message counter diagnosis flag field 11120105) concerning the receive data allocated with the CAN_ID obtained in the above step 1109004.

### (FIG. 29: Step 1109008)

The diagnostic setting checking unit 1108 records the determination result obtained at the current key-on count in the diagnostic setting check result storage table 11140010 (see FIG. 14). In this step, in cases where the above step 1109006 was executed for the portion corresponding to the current key-on count of the transmission/reception determination flag field 11140015, namely, in cases where the diagnostic setting information obtained from another vehicle control device was compared with the diagnostic setting information included in the transmit data, "1" is recorded and, in cases where the above step 1109007 was executed, namely, in cases where the diagnostic setting information obtained from another vehicle control device was compared with the diagnostic setting information included in the receive data, "0" is recorded. Also, in cases where the diagnostic setting information comparison result obtained in the above step 1109006 or 1109007 was a match, "0" is recorded in the diagnostic setting check result field 11140016 corresponding to the current key-on count and, in cases where the comparison result was a non-match, "1" is recorded.

### (FIG. 29: Step 1109009)

The diagnostic setting checking unit 1108 determines whether or not the diagnostic settings for the communication data include abnormality based on the comparison result obtained in the above step 1109006 or 1109007. When the diagnostic settings for the communication data include abnormality, namely, in cases where the diagnostic setting comparison result obtained in step 1109006 or 1109007 was a non-match and "1" was recorded in the diagnostic setting check result field 11140016 in step 1190998, the diagnostic setting checking unit 1108 advances to step 1109010. On the other hand, in cases where the diagnostic settings for the communication data included no abnormality, namely, in cases where the diagnostic setting check result obtained in step 110906 or 1109007 was a match and "0" was recorded in the diagnostic setting check result field 11140016 in step 1109008, the diagnostic setting checking unit 1108 advances to step 1109002.

### (FIG. 29: Step 1109010)

The diagnostic setting checking unit 1108 assigns 1 to the flag value recorded in the diagnostic setting abnormality notification flag field 11120064 of the diagnostic setting information-related flag management table 11120060 shown in FIG. 8. Subsequently, the diagnostic setting checking unit 1108 advances to step 1109002.

Through the above steps, the diagnostic setting checking unit 1108 can determine whether or not the diagnostic settings for individual communication data of the brake assist device ECU 11 match between the transmitting side and the receiving side. Also, when the diagnostic settings do not match between the transmitting side and the receiving side, the diagnostic setting checking unit 1108 determining that the diagnostic settings include abnormality can assign 1 to the diagnostic setting abnormality notification flag field 11120064 to enable notification of the diagnostic setting abnormality.

FIG. 30 shows the operation flow of the diagnostic setting check result transmit data generation unit 1109. In the operation flow, the arithmetic unit 1101 calls and executes the diagnostic setting check result transmit data generation program 11091 listed in FIG. 2, thereby functioning as the diagnostic setting check result transmit data generation unit 1109. Each step shown in FIG. 30 will be described in the following.

### (FIG. 30: Step 1108100)

The diagnostic setting check result transmit data generation unit 1109 determines whether or not the flag setting recorded in the diagnostic setting check result transmission request flag field 11120063 of the diagnostic setting information-related flag management table 11120060 (see FIG. 8) is 1. When the flag setting is 1, the diagnostic setting check result transmit data generation unit 1109 advances to step 1108101, or otherwise ends the operation flow shown in FIG. 30.

### (FIG. 30: Step 1108101)

The diagnostic setting check result transmit data generation unit 1109 assigns 0 to counter i. This counter i is different from the counters i used in the operation flows shown in FIGS. 24 and 29, respectively.

### (FIG. 30: Step 1108102)

The diagnostic setting check result transmit data generation unit 1109 adds 1 to the counter i.

### (FIG. 30: Step 1108103)

The diagnostic setting check result transmit data generation unit 1109 determines whether or not the counter i value exceeds the number of diagnostic setting check result records 11120018 stored in the table size management table 11120010 shown in in FIG. 4, i.e. 4. The diagnostic setting check result transmit data generation unit 1109 advances to step 1108105 when the counter i value exceeds the number of diagnostic setting check result records 11120018, or otherwise advances to step 1108104.

### (FIG. 30: Step 1108104)

The diagnostic setting check result transmit data generation unit 1109 stores, in one of the diagnostic setting check result storage areas included in the diagnostic setting check result transmit data 140030 shown in FIG. 18, the diagnostic setting check result for the communication data with the key-on count recorded in the key-on count field 11140011 of the diagnostic setting check result storage table 11140010 matching the current counter i value, the communication data also corresponding to the CAN_ID stored in the request target CAN_ID field 140022 of the diagnostic setting check result request data 140020 (see FIG. 17) that was received from the diagnostic setting check result analysis tool 2 and was stored in a reception buffer in step 1111101 shown in FIG. 28. Herein, the diagnostic setting check result for the communication data is stored in the smallest-numbered vacant field out of the diagnostic setting check result storage area 1 field 140032 to the diagnostic setting check result storage area 4 field 140035. Furthermore, in this step, the CAN_ID, key-on count and safety integrity level of the communication data and the transmission/reception determination flag indicating whether the communication data is transmit data or receive data are stored in the data configuration shown in FIG. 18. Thus, the diagnostic setting check result transmit data 140030 as shown in FIG. 18 is generated by sequentially storing the diagnostic setting check results for request target communication data. The diagnostic setting check result transmit data generation unit 1109 subsequently advances to step 1108102.

### (FIG. 30: Step 1108105)

The diagnostic setting check result transmit data generation unit 1109 stores the diagnostic setting check result transmit data 140030 generated as described above, for example, in a transmission buffer (not shown) included in the data storage area 1112 (see FIG. 2).

Through the above steps, the diagnostic setting check result transmit data generation unit 1109 can generate the diagnostic setting check result transmit data 140030 as shown in FIG. 18.

FIG. 31 shows the operation flow of the transmission processing unit 1110 transmitting the diagnostic setting check result transmit data 140030 generated using the operation flow shown in FIG. 30 or making diagnostic setting abnormality notification. In this operation flow, the arithmetic unit 1101 calls and executes the transmission processing program 11101 listed in FIG. 2, thereby functioning as the transmission processing unit 1110. Each step shown in FIG. 31 will be described below.

### (FIG. 31: Sep 1110003)

The transmission processing unit 1110 determines whether or not the flag setting recorded in the diagnostic setting check result transmission request flag field 11120063 of the diagnostic setting information-related flag management table 11120060 shown in FIG. 8 is 1. The transmission processing program 1110 advances to step 11100004 when the flag setting is 1, or otherwise advances to step 11100007.

### (FIG. 31: Step 111004)

The transmission processing unit 1110 stores the diagnostic setting check result transmit data 140030 that was stored in a transmission buffer in step 1108105 shown in FIG. 30 in a mailbox (not shown) of the CAN controller 1118. This makes it possible to transmit the diagnostic setting check result transmit data 140030 generated in the operation flow shown in FIG. 30 from the CAN controller 1118 to the diagnostic setting information check result analysis tool 2 via the CAN 14.

### (FIG. 31: Step 1110005)

The transmission processing unit 1110 assigns 0 to the diagnostic setting check result transmission request flag field 11120063 of the diagnostic setting information-related flag management table 11120060 shown in FIG. 8.

### (FIG 31: Step 1110007)

The transmission processing unit 1110 determines whether or not the flag setting recorded in the diagnostic setting abnormality notification flag field 11120064 of the diagnostic setting information-related flag management table 11120060 shown in FIG. 8 is 1. When the flag setting is 1, the transmission processing unit 1110 advances to step 11100008, or otherwise ends the operation flow shown in FIG. 31.

### (FIG. 31: Step 1110008)

The transmission processing unit 1110 stores the diagnostic setting abnormality notification data 140040 as shown in FIG. 19 in a mailbox (not shown) of the CAN controller 1118. This makes it possible to transmit the diagnostic setting abnormality notification data 140040 from the CAN controller 1118 to the meter ECU 13 via the CAN 14.

### (FIG. 31: Step 1110009)

The transmission processing unit 1110 assigns 0 to the diagnostic setting abnormality notification flag field 11120064 of the diagnostic setting information-related flag management table 11120060 shown in FIG. 8.

Through the above steps, the transmission processing unit 1110 can transmit the diagnostic setting check result to the diagnostic setting information check result analysis tool 2 or the meter ECU 13 via the CAN 14.

The operation flows of the programs stored in the program area 1103 of the brake assist device ECU 11 have been described above.

In the following, the operation flows of the programs stored in the program area 1303 of the meter ECU 13 will be described.

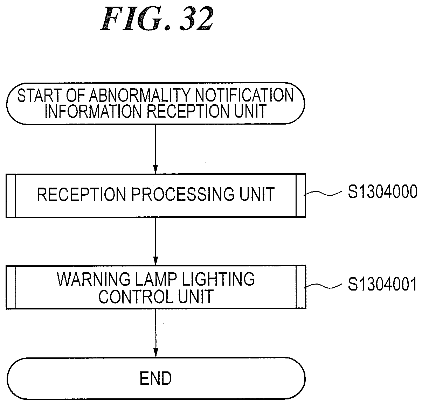

FIG. 32 shows the operation flow of the abnormality notification information reception unit 1304 shown in FIG. 3. In the operation flow, the arithmetic unit 1301 calls and executes the abnormality notification information reception program 13041 listed in FIG. 3, thereby functioning as the abnormality notification information reception unit 1304. Each step shown in FIG. 32 will be described in the following.

### (FIG. 32: Step 1304000)

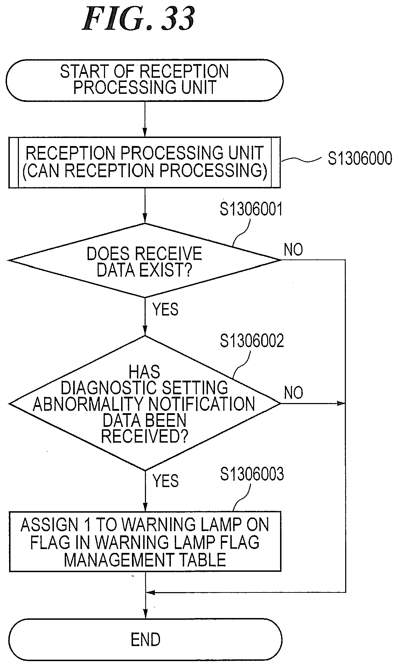

The abnormality notification information reception unit 1304 calls the operation flow of the reception processing unit 1306 to be described later with reference to FIG. 33 and, thereby, obtains the abnormality notification information transmitted from the brake assist device ECU 11.

### (FIG. 32: Step 1304001)

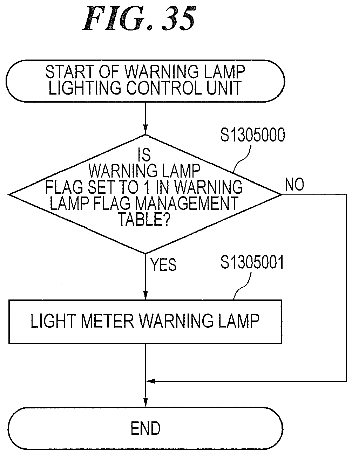

The abnormality notification information reception unit 1304 calls the operation flow of the warning lamp lighting control unit 1305 to be described later with reference to FIG. 35. This enables the meter ECU 13 to determine whether or not to light the warning lamp 1308 for giving a warning to the driver.

Through the above steps, the abnormality notification information reception unit 1304 can receive the abnormality notification information transmitted from the brake assist device ECU 11 and determine whether or not to light the warning lamp 1308.

FIG. 33 shows the operation flow of the reception processing unit 1306. In the operation flow, the arithmetic unit 1301 calls and executes the reception processing program 13061 listed in FIG. 2, thereby functioning as the reception processing unit 1036. Each step shown in FIG. 33 will be described in the following.

### (FIG. 33: Step 1306000)

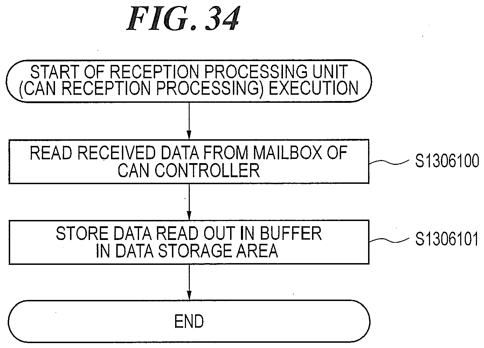

By calling and executing the operation flow of the CAN reception processing to be described later with reference to FIG. 34, the reception processing unit 1306 receives the data transmitted from the brake assist device ECU 11 via the CAN 14.

### (FIG. 33: Step 1306001)

The reception processing unit 1306 determines, in step 1306001, whether or not receive data has been obtained. When it is determined that receive data has been obtained, the reception processing unit 1306 advances to step 1306002, or otherwise ends the operation flow shown in FIG. 33.

### (FIG. 33: Step 1306002)

The reception processing unit 1306 determines whether or not the data received is the diagnostic setting abnormality notification data 140040 as shown in FIG. 19 transmitted from the brake assist device ECU 11. When it is determined that the received data is the diagnostic setting abnormality notification data 140040, the reception processing unit 1306 advances to step 1306003, or otherwise ends the operation flow shown in FIG. 33.

### (FIG. 33: Step 1306003)

The reception processing unit 1306 assigns 1 to the warning lamp on flag field 1307021 of the warning lamp on flag management table 13070020 (see FIG. 21).

Through the above steps, the reception processing unit 1306 can receive the diagnostic setting abnormality notification form the brake assist device ECU 11.

FIG. 34 shows the operation flow of the CAN reception processing called and executed in the above step 1306000. Each step shown in FIG. 34 will be described in the following.

### (FIG. 34: Step 1306100)

The reception processing unit 1306 reads out the data received via the CAN 14 from a mailbox (not shown) of the CAN controller 1310. The data is the diagnostic setting abnormality notification data 140040 transmitted from the brake assist device ECU 11.

### (FIG. 34: Step 1306101)

The reception processing unit 1306 stores the data read out in step 1306100 in a buffer (not shown) in the data storage area 1307.

Through the above steps, the diagnostic setting abnormality notification data 140040 transmitted from the brake assist device ECU 11 can be received via the CAN 14.

FIG. 35 shows the operation flow of the warning lamp lighting control unit 1305. In the operation flow, the arithmetic unit 1301 calls and executes the warning lamp lighting control program 13051 listed in FIG. 2, thereby functioning as the warning lamp lighting control unit 1305. Each step shown in FIG. 35 will be described in the following.

### (FIG. 35: Step 1305000)

The warning lamp lighting control unit 1305 determines whether or not the flag setting recorded in the warning lamp on flag field 13070021 of the warning lamp flag management table 13070020 (see FIG. 21) is 1. When the flag setting is 1, the warning lamp lighting control unit 1305 advances to step 1305001, or otherwise ends the operation flow shown in FIG. 35.

### (FIG. 35: Step 1305001)

The warning lamp lighting control unit 1305 lights the warning lamp 1308 connected to the meter ECU 13.

Through the above steps, the meter ECU 13 can detect diagnostic setting abnormality in another vehicle control device and warn the driver by lighting the warning lamp 1308.

The operation flows of the programs stored in the program area 1303 of the meter ECU 13 have been described above.

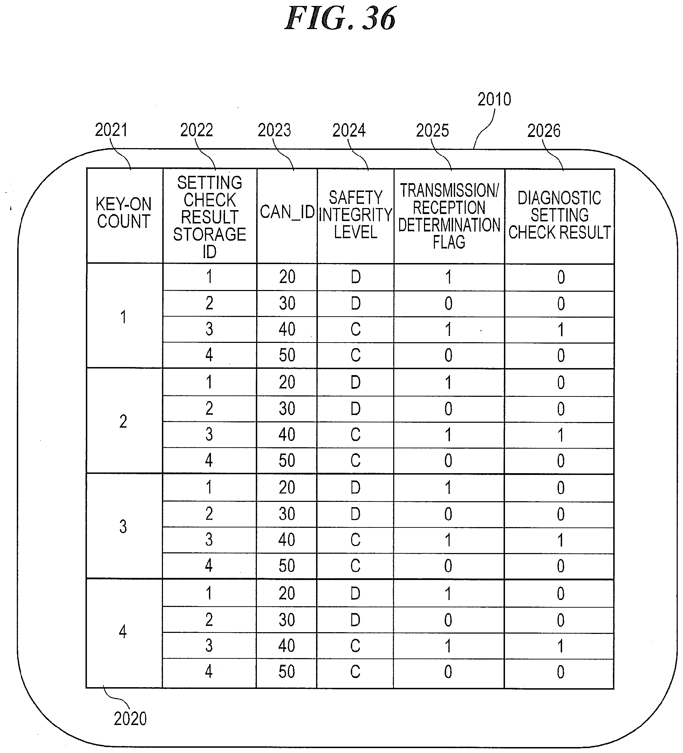

FIG. 36 shows an example of an analysis result display screen 2010 of the diagnostic setting check result analysis tool 2. The diagnostic setting check result analysis tool 2 displays on the screen a table of diagnostic setting check results for communication data of the brake assist device ECU 11 as shown in FIG. 36 based on the diagnostic setting check result data 140030, shown in FIG. 18, received from the brake assist device ECU 11. The analysis result display screen 2010 displays an analysis result display table 2020. The analysis result display table 2020 is a table representing diagnostic setting check results and has a key-on count field 2021, a setting check result storage ID field 2022, a CAN_ID field 2023, a safety integrity level field 2024, a transmission/reception determination flag field 2015, and a diagnostic setting check result field 2026.

The key-on count field 2021 represents the key-on count at the time of diagnostic setting comparison. The setting check result storage ID field 2022 stores identifiers for determining the order of communication data in which the corresponding diagnostic setting check results are stored by the brake assist device ECU 11. The CAN_ID field 2023 stores CAN_IDs as data identifiers for identifying the data corresponding to the respective diagnostic setting check results. The safety integrity level field 2024 represents automotive safety integrity levels (ASIL) allocated to the respective communication data. In the present example, the safety integrity levels are represented based on ASIL, but they are not limited as such.

The transmission/reception determination flag field 2025 stores flags for determining whether the respective diagnostic setting check results are for receive data or for transmit data. When a diagnostic setting check result is for receive data, the corresponding transmission/reception determination flag is set to "0" and, when the diagnostic setting check result is for transmit data, the flag is set to "1." The diagnostic setting check result field 2026 holds the results of determining whether or not the diagnostic settings for the communication data managed by the brake assist device ECU 11 have matched the corresponding diagnostic settings at another vehicle control device with which the brake assist device ECU 11 communicates for the communication data. This field holds "0" when the diagnostic settings match between the brake assist device ECU 11 and another vehicle control device, or otherwise holds "1."

The method the diagnostic setting check result analysis tool 2 can use to display diagnostic setting check results is not limited to the above-described. For example, the diagnostic setting check result field 2026 may indicate only abnormal diagnostic setting check results each represented by "1."

As described above, the brake assist device ECU 11, an embodiment of the vehicle control device according to the present invention, can detect, using the diagnostic setting information exchanged via a network, a match or non-match between the diagnostic function settings for communication data of the brake assist device ECU 11 and those of another vehicle control device. Also, by notifying the meter ECU 13 of diagnostic setting abnormality at the brake assist device ECU 11 via a network, the warning lamp 1308 can be lit to warn the driver. Furthermore, the diagnostic setting check result analysis tool 2 connected to the network can obtain diagnostic setting check results via the network. The embodiment for detecting a non-match in diagnostic setting information between two vehicle control devices communicating with each other is not limited to the above-described. For example, an ECU for checking diagnostic setting information and recording diagnostic setting check result information may be additionally connected to the CAN 14.

Examples of an embodiment and a modified embodiment of the vehicle control device according to the present invention have been described, but the present invention is not limited to the above-described embodiment and modified embodiment. The present invention can be modified in various ways by those skilled in the art without departing from the features of the invention.

### List of Reference Signs

1...Vehicle control system
2...Diagnostic setting check result analysis tool
11...Brake assist device ECU
12...Brake ECU
13...Meter ECU
14...CAN
1101...Arithmetic unit
1102...Memory
1103...Program area
1104...Diagnostic setting information transmission unit
1105...Diagnostic setting information reception unit
1106...Diagnostic setting information transmission timing adjustment unit
1107...Diagnostic setting information transmit data generation unit
1108...Diagnostic setting checking unit
1109... Diagnostic setting check result transmit data generation unit
1110...Transmission processing unit
1111...Reception processing unit
1112...Data storage area (table)
1113...Backup memory
1114...Data storage area (table)
1115...Resolver
1116...Brake assist device motor
1117...Input/output circuit
1118...CAN controller
1119...Signal input/output circuit
1201...Acceleration sensor
1202...Anti-skid motor
1301...Arithmetic unit
1302...Memory
1303...Program area
1304...Abnormality notification information reception unit
1305...Warning lamp lighting control unit
1306...Reception processing unit
1307...Data storage area
1308...Warning lamp
1309...Input/output circuit
1310...CAN controller
1311...Signal input/output circuit

## Claims

1. A vehicle control device exchanging communication data with another vehicle control device connected thereto via a network, comprising:
a storage unit for storing first diagnostic setting information concerning the communication data;
a diagnostic setting information transmit data generation unit (1107) for generating first diagnostic setting information transmit data based on the first diagnostic setting information;
a transmission processing unit (1110) for transmitting the first diagnostic setting information transmit data to the other vehicle control device via the network;
a reception processing unit (1111) for obtaining second diagnostic setting information transmit data transmitted from the other vehicle control device via the network; and
a diagnostic setting checking unit (1108) for executing a diagnostic setting checking process, the diagnostic setting checking process including extracting second diagnostic setting information concerning the communication data from the second diagnostic setting information transmit data, comparing the first diagnostic setting information with the second diagnostic setting information, and storing a diagnostic setting check result obtained by the comparison in the storage unit, **characterized in that** the diagnostic setting information transmit data generation unit (1107) selects, based on a safety integrity level preset for the communication data, the first diagnostic setting information for use in generating the first diagnostic setting information transmit data.

2. The vehicle control device according to claim 1,
wherein the diagnostic setting checking unit (1108) executes the diagnostic setting checking process every time a vehicle mounted with the vehicle control device is started up.

3. The vehicle control device according to claim 1,
wherein the first diagnostic setting information transmit data includes an identifier for the communication data, a flag to indicate whether the communication data is transmit data or receive data, and information about a diagnostic setting combination represented by the first diagnostic setting information.

4. The vehicle control device according to claim 1, further comprising a diagnostic setting check result transmit data generation unit (1109) which, in response to a transmission request transmitted from a diagnostic setting check result analysis tool (2) connected to the network for transmission of the diagnostic setting check result, generates diagnostic setting check result transmit data based on the diagnostic setting check result,
wherein the transmission processing unit (1110) transmits the diagnostic setting check result transmit data to the diagnostic setting check result analysis tool (2) via the network.

5. The vehicle control device according to claim 4,
wherein the transmission request for transmission of the diagnostic setting check result includes the communication data identifier.

6. The vehicle control device according to claim 4,
wherein the diagnostic setting check result transmit data includes the communication data identifier, a key-on count at a time of diagnosis, a safety integrity level of the communication data, a flag indicating whether the communication data is transmit data or receive data, and the diagnostic setting check result.

7. The vehicle control device according to claim 1, further comprising a diagnostic setting information transmission timing adjustment unit (1106) for adjusting timing of generation of the first diagnostic setting information transmit data by the diagnostic setting information transmit data generation unit (1107) and timing of transmission of the first diagnostic setting information transmit data by the transmission processing unit (1110).

8. A vehicle control system including a plurality of vehicle control devices each being identical with the vehicle control device according to claim 1,
wherein the vehicle control devices:
respectively transmit, each using the transmission processing unit (1110), the first diagnostic setting information transmit data concerning communication data thereof to other vehicle control devices;
respectively obtain, each using the reception processing unit (1111), the second diagnostic setting information transmit data transmitted from the other vehicle control devices; and
respectively execute, each using the diagnostic setting checking unit (1108), the diagnostic setting checking process.

9. The vehicle control system according to claim 8,
wherein a diagnostic setting check result analysis tool (2) is connected to the network, and
in response to a transmission request transmitted from the diagnostic setting check result analysis tool (2) for transmission of the diagnostic setting check result, each of the vehicle control devices generates diagnostic setting check result transmit data based on the diagnostic setting check result and transmits the diagnostic setting check result transmit data to the diagnostic setting check result analysis tool (2).

10. The vehicle control system according to claim 8,
wherein each of the vehicle control devices gives, when diagnostic setting abnormality concerning communication data thereof is detected in the diagnostic setting check result, notice of the diagnostic setting abnormality to a warning lamp control device connected to both the network and a warning lamp (1308), and
the warning lamp control unit lights the warning lamp (1308) upon being notified of the diagnostic setting abnormality.

11. The vehicle control system according to claim 9,
wherein the diagnostic setting check result transmit data includes the communication data identifier, a key-on count at a time of diagnosis, a safety integrity level of the communication data, a flag indicating whether the communication data is transmit data or receive data, and the diagnostic setting check result, and
upon receipt of the diagnostic setting check result transmit data, the diagnostic setting check result analysis tool (2) displays the key-on count, the communication data identifier, the safety integrity level of the communication data, the flag, and the diagnostic setting check result.

12. The vehicle control system according to claim 8,
wherein each of the vehicle control devices increments a key-on count every time an engine or a motor drive system of a vehicle is started and stores the diagnostic setting check result corresponding to each key-on count value in the storage unit.

13. The vehicle control system according to claim 11,
wherein the safety integrity level of the communication data can be set based on information transmitted from the diagnostic setting check result analysis tool (2).

## Patentansprüche

1. Fahrzeugsteuervorrichtung, die Kommunikationsdaten mit einer weiteren Fahrzeugsteuervorrichtung, die über ein Netz damit verbunden ist, austauscht und Folgendes umfasst:
eine Speichereinheit zum Speichern erster Diagnoseeinstellungsinformationen, die die Kommunikationsdaten betreffen;
eine Sendedatenerzeugungseinheit (1107) für Diagnoseeinstellungsinformationen zum Erzeugen erster Sendedaten für Diagnoseeinstellungsinformationen anhand der ersten Diagnoseeinstellungsinformationen;
eine Sendeverarbeitungseinheit (1110) zum Senden der ersten Sendedaten für Diagnoseeinstellungsinformationen an die weitere Fahrzeugsteuervorrichtung über das Netz;
eine Empfangsverarbeitungseinheit (1111) zum Erhalten zweiter Sendedaten für Diagnoseeinstellungsinformationen, die von der weiteren Fahrzeugsteuervorrichturig über das Netz gesendet worden sind; und
eine Diagnoseeinstellungsüberprüfungseinheit (1108) zum Ausführen eines Diagnoseeinstellungsüberprüfungsvorgangs, wobei der Diagnoseeinstellungsüberprüfungsvorgang das Extrahieren zweiter Diagnoseeinstellungsinformationen, die die Kommunikationsdaten von den zweiten Sendedaten für Diagnoseeinstellungsinformationen betreffen, das Vergleichen der ersten Diagnoseeinstellungsinformationen mit den zweiten Diagnoseeinstellungsinformationen und das Speichern eines Diagnoseeinstellungsüberprüfungsergebnisses, das durch den Vergleich in der Speichereinheit erhalten worden ist, enthält, **dadurch gekennzeichnet, dass** die Sendedatenerzeugungseinheit (1107) für Diagnoseeinstellungsinformationen anhand eines Sicherheitsintegritätsgrads, der für die Kommunikationsdaten voreingestellt worden ist, die ersten Diagnoseeinstellungsinformationen zur Verwendung bei der Erzeugung der ersten Sendedaten für Diagnoseeinstellungsinformationen auswählt.

2. Fahrzeugsteuervorrichtung nach Anspruch 1,
wobei die Diagnoseeinstellungsüberprüfungseinheit (1108) den Diagnoseeinstellungsüberprüfungsvorgangjedes Mal dann ausführt, wenn ein Fahrzeug, in dem die Fahrzeugsteuervorrichtung montiert ist, gestartet wird.

3. Fahrzeugsteuervorrichtung nach Anspruch 1,
wobei die ersten Sendedaten für Diagnoseeinstellungsinformationen eine Kennung für die Kommunikationsdaten, eine Markierung, um darauf hinzuweisen, ob die Kommunikationsdaten Sendedaten oder Empfangsdaten sind, und Informationen über eine Diagnoseeinstellungskombination, die durch die ersten Diagnoseeinstellungsinformationen dargestellt wird, enthalten.

4. Fahrzeugsteuervorrichtung nach Anspruch 1, die ferner eine Sendedatenerzeugungseinheit (1109) für Diagnoseeinstellungsüberprüfungsergebnisse umfasst, die als Reaktion auf eine Sendeanfrage, die von einem Analysewerkzeug (2) für Diagnoseeinstellungsüberprüfungsergebnisse, das mit dem Netz für das Senden des Diagnoseeinstellungsüberprüfungsergebnisses verbunden ist, gesendet worden ist, Sendedaten für Diagnoseeinstellungsüberprüfungsergebnisse anhand des Diagnoseeinstellungsüberprüfungsergebnisses erzeugt,
wobei die Sendeverarbeitungseinheit (1110) die Sendedaten für Diagnoseeinstellungsüberprüfungsergebnisse über das Netz an das Analysewerkzeug (2) für Diagnoseeinstellungsüberprüfungsergebnisse sendet.

5. Fahrzeugsteuervorrichtung nach Anspruch 4,
wobei die Sendeanfrage zum Senden des Diagnoseeinstellungsüberprüfungsergebnisses die Kommunikationsdatenkennung enthält.

6. Fahrzeugsteuervorrichtung nach Anspruch 4,
wobei die Sendedaten für Diagnoseeinstellungsüberprüfungsergebnisse die Kommunikationsdatenkennung, einen Schlüssel-Ein-Zählwert zu einem Zeitpunkt der Diagnose, einen Sicherheitsintegritätsgrad der Kommunikationsdaten, eine Markierung, die darauf hinweist, ob die Kommunikationsdaten Sendedaten oder Empfangsdaten sind, und das Diagnoseeinstellungsüberprüfungsergebnis enthalten.

7. Fahrzeugsteuervorrichtung nach Anspruch 1, die ferner eine Sendezeitvorgaben-Einstellungseinheit (1106) für Diagnoseeinstellungsinformationen zum Einstellen der Zeitvorgabe der Erzeugung der ersten Sendedaten für Diagnoseeinstellungsinformationen durch die Sendedatenerzeugungseinheit (1107) für Diagnoseeinstellungsinformationen und der Zeitvorgabe des Sendens der ersten Sendedaten für Diagnoseeinstellungsinformationen durch die Sendeverarbeitungseinheit (1110) umfasst.

8. Fahrzeugsteuersystem, das mehrere Fahrzeugsteuervorrichtungen, die jeweils mit der Fahrzeugsteuervorrichtung nach Anspruch 1 identisch sind, enthält,
wobei die Fahrzeugsteuervorrichtungen:
jeweils unter Verwendung der Sendeverarbeitungseinheit (1110) die ersten Sendedaten für Diagnoseeinstellungsinformationen, die deren Kommunikationsdaten betreffen, an weitere Fahrzeugsteuervorrichtungen senden;
jeweils unter Verwendung der Empfangsverarbeitungseinheit (1111) die zweiten Sendedaten für Diagnoseeinstellungsinformationen, die von den weiteren Fahrzeugsteuervorrichtungen gesendet worden sind, erhalten; und
jeweils unter Verwendung der Diagnoseeinstellungsüberprüfungseinheit (1108) den Diagnoseeinstellungsüberprüfungsvorgang ausführen.

9. Fahrzeugsteuersystem nach Anspruch 8,
wobei ein Analysewerkzeug (2) für Diagnoseeinstellungsüberprüfungsergebnisse mit dem Netz verbunden ist und
als Reaktion auf eine Sendeanfrage, die von dem Analysewerkzeug (2) für Diagnoseeinstellungsüberprüfungsergebnisse zum Senden des Diagnoseeinstellungsüberprüfungsergebnisses gesendet worden ist, jede der Fahrzeugsteuervorrichtungen Sendedaten für Diagnoseeinstellungsüberprüfungsergebnisse anhand des Diagnoseeinstellungsergebnisses erzeugt und die Sendedaten für Diagnoseeinstellungsüberprüfungsergebnisse an das Analysewerkzeug (2) für Diagnoseeinstellungsüberprüfungsergebnisse sendet.

10. Fahrzeugsteuersystem nach Anspruch 8,
wobei dann, wenn eine Diagnoseeinstellungsanomalie, die Kommunikationsdaten davon betrifft, in dem Diagnoseeinstellungsüberprüfungsergebnis detektiert worden ist, jede der Fahrzeugsteuervorrichtungen eine Warnleuchtensteuervorrichtung, die sowohl mit dem Netz als auch mit einer Warnleuchte (1308) verbunden ist, über die Diagnoseeinstellungsanomalie benachrichtigt und
die Warnleuchtensteuereinheit die Warnleuchte (1308) dann erleuchtet, wenn sie über die Diagnoseeinstellungsanomalie benachrichtigt wird.

11. Fahrzeugsteuersystem nach Anspruch 9,
wobei die Sendedaten für Diagnoseeinstellungsüberprüfungsergebnisse die Kommunikationsdatenkennung, einen Schlüssel-Ein-Zählwert zu einem Zeitpunkt der Diagnose, einen Sicherheitsintegritätsgrad der Kommunikationsdaten, eine Markierung, die darauf hinweist, ob die Kommunikationsdaten Sendedaten oder Empfangsdaten sind, und das Diagnoseeinstellungsüberprüfungsergebnis enthalten und
das Analysewerkzeug (2) für Diagnoseeinstellungsüberprüfungsergebnisse den Schlüssel-Ein-Zählwert, die Kommunikationsdatenkennung, den Sicherheitsintegritätsgrad der Kommunikationsdaten, die Markierung und das Diagnoseeinstellungsüberprüfungsergebnis dann anzeigt, wenn die Sendedaten für Diagnoseeinstellungsüberprüfungsergebnisse empfangen worden sind.

12. Fahrzeugsteuersystem nach Anspruch 8,
wobei jede der Fahrzeugsteuervorrichtungen einen Schlüssel-Ein-Zählwert jedes Mal dann erhöht, wenn eine Kraftmaschine oder ein Motorantriebssystem eines Fahrzeugs gestartet wird, und das Diagnoseeinstellungsüberprüfungsergebnis, das jedem Schlüssel-Ein-Zählwert in der Speichereinheit entspricht, speichert.

13. Fahrzeugsteuersystem nach Anspruch 11,
wobei der Sicherheitsintegritätsgrad der Kommunikationsdaten anhand von Informationen, die von dem Analysewerkzeug (2) für Diagnoseeinstellungsüberprüfungsergebnisse gesendet worden sind, eingestellt werden kann.

## Revendications

1. Dispositif de commande de véhicule qui échange des données de communication avec un autre dispositif de commande de véhicule connecté à lui-même via un réseau, comprenant :
une unité de stockage pour stocker une première information de fixation de diagnostic concernant les données de communication ;
une unité de génération de données de transmission d'information de fixation de diagnostic (1107) pour générer des premières données de transmission d'information de fixation de diagnostic basées sur la première information de fixation de diagnostic ;
une unité de traitement de transmission (1110) pour transmettre les premières données de transmission d'information de fixation de diagnostic à l'autre dispositif de commande de véhicule via le réseau ;
une unité de traitement de réception (1111) pour obtenir des secondes données de transmission d'information de fixation de diagnostic transmises depuis l'autre dispositif de commande de véhicule via le réseau ; et
une unité de vérification de fixation de diagnostic (1108) pour exécuter une procédure de vérification de fixation de diagnostic, la procédure de vérification de fixation de diagnostic incluant l'extraction d'une seconde information de fixation de diagnostic concernant les données de communication depuis les secondes données de transmission d'information de fixation de diagnostic, la comparaison de la première information de fixation de diagnostic avec la seconde information de fixation de diagnostic, et le stockage d'un résultat de vérification de fixation de diagnostic obtenu par la comparaison dans l'unité de stockage,
**caractérisé en ce que** l'unité de génération de données de transmission d'information de fixation de diagnostic (1107) sélectionne, sur la base d'un niveau d'intégrité de sécurité préétabli pour les données de communication, la première information de fixation de diagnostic pour l'utilisation lors de la génération des premières données de transmission d'information de fixation de diagnostic.

2. Dispositif de commande de véhicule selon la revendication 1,
dans lequel l'unité de vérification de fixation de diagnostic (1108) exécute le processus de vérification de fixation de diagnostic chaque fois qu'un véhicule dans lequel est monté le dispositif de commande de véhicule est démarré.

3. Dispositif de commande de véhicule selon la revendication 1,
dans lequel les premières données de transmission d'information de fixation de diagnostic incluent un identificateur pour les données de communication, un drapeau pour indiquer si les données de communication sont des données émises ou des données reçues, et une information concernant une combinaison de fixation de diagnostic représentée par la première information de fixation de diagnostic.

4. Dispositif de commande de véhicule selon la revendication 1, comprenant en outre une unité de génération de données de transmission de résultats de vérification de fixation de diagnostic (1109) qui, en réponse à une requête de transmission transmise depuis un outil d'analyse de résultats de vérification de fixation de diagnostic (2) connecté au réseau pour la transmission du résultat de vérification de fixation de diagnostic, génère des données de transmission de résultats de vérification de fixation de diagnostic sur la base du résultat de vérification de fixation de diagnostic,
dans lequel l'unité de traitement de transmission (1110) transmet les données de transmission de résultats de vérification de fixation de diagnostic à l'outil d'analyse de résultats de vérification de fixation de diagnostic (2) via le réseau.

5. Dispositif de commande de véhicule selon la revendication 4,
dans lequel la requête de transmission pour la transmission du résultat de vérification de fixation de diagnostic inclut l'identificateur de données de communication.

6. Dispositif de commande de véhicule selon la revendication 4,
dans lequel les données de transmission de résultats de vérification de fixation de diagnostic incluent l'identificateur de données de communication, un décompte saisi au moment du diagnostic, un niveau d'intégrité de sécurité des données de communication, un drapeau indiquant si les données de communication sont des données émises ou des données reçues, et le résultat de vérification de fixation de diagnostic.

7. Dispositif de commande de véhicule selon la revendication 1, comprenant en outre une unité d'ajustement de temporisation de transmission d'information de fixation de diagnostic (1106) pour ajuster la temporisation de la génération des premières données de transmission d'information de fixation de diagnostic par l'unité de génération de données de transmission d'information de fixation de diagnostic (1107) et la temporisation de la transmission des premières données de transmission d'information de fixation de diagnostic par l'unité de traitement de transmission (1110).

8. Système de commande de véhicule incluant une pluralité de dispositifs de commande de véhicule, chacun étant identique au dispositif de commande de véhicule selon la revendication 1,
dans lequel les dispositifs de commande de véhicule :
transmettent respectivement, utilisant chacun l'unité de traitement de transmission (1110), les premières données de transmission d'information de fixation de diagnostic concernant les données de communication de ceux-ci à d'autres dispositifs de commande de véhicule ;
obtiennent respectivement, utilisant chacun l'unité de traitement de réception (1111), les secondes données de transmission d'information de fixation de diagnostic transmises depuis les autres dispositifs de commande de véhicule ; et
exécutent respectivement, utilisant chacun l'unité de vérification de fixation de diagnostic (1108), le processus de vérification de fixation de diagnostic.

9. Système de commande de véhicule selon la revendication 8,
dans lequel un outil d'analyse de résultat de vérification de fixation de diagnostic (2) est connecté au réseau, et
en réponse à une requête de transmission transmise depuis l'outil d'analyse de résultat de vérification de fixation de diagnostic (2) pour transmission du résultat de vérification de fixation de diagnostic, chacun des dispositifs de commande de véhicule génère des données de transmission de résultat de vérification de fixation de diagnostic sur la base du résultat de vérification de fixation de diagnostic et transmet les données de transmission de résultat de vérification de fixation de diagnostic à l'outil d'analyse de résultat de vérification de fixation de diagnostic (2).

10. Système de commande de véhicule selon la revendication 8,
dans lequel chacun des dispositifs de commande de véhicule donne, quand une anomalie de fixation de diagnostic concernant les données de communication de ceux-ci est détectée dans le résultat de vérification de fixation de diagnostic, notification de l'anomalie de fixation de diagnostic à un dispositif de commande de lampe d'avertissement connecté à la fois au réseau et à une lampe d'avertissement (1308), et
l'unité de commande de lampe d'avertissement allume la lampe d'avertissement (1308) lorsqu'elle reçoit une notification de l'anomalie de fixation de diagnostic.

11. Système de commande de véhicule selon la revendication 9,
dans lequel les données de transmission de résultat de vérification de fixation de diagnostic incluent l'identificateur de données de communication, un décompte saisi au moment du diagnostic, un niveau d'intégrité de sécurité des données de communication, un drapeau indiquant si les données de communication sont des données émises ou des données reçues, et le résultat de vérification de fixation de diagnostic, et
lorsqu'il reçoit les données de transmission de résultat de vérification de fixation de diagnostic, l'outil d'analyse de résultat de vérification de fixation de diagnostic (2) affiche le décompte saisi, l'identificateur de données de communication, le niveau d'intégrité de sécurité des données de communication, le drapeau, et le résultat de vérification de fixation de diagnostic.

12. Système de commande de véhicule selon la revendication 8,
dans lequel chacun des dispositifs de commande de véhicule incrémente un décompte saisi chaque fois qu'un moteur ou un système d'entraînement à moteur d'un véhicule est démarré et stocke le résultat de vérification de fixation de diagnostic correspondant à chaque valeur de décompte saisi dans l'unité de stockage.

13. Système de commande de véhicule selon la revendication 11,
dans lequel le niveau d'intégrité de sécurité des données de communication peut être fixé sur la base d'une information transmise depuis l'outil d'analyse de résultat de vérification de fixation de diagnostic (2).
